(19) Europäisches Patentamt
European Patent Office
Office européen des brevets

(11) Numéro de publication: **0 156 084 B1**

(12) **FASCICULE DE BREVET EUROPEEN**

(45) Date de publication du fascicule du brevet: **08.11.89**

(51) Int. Cl.⁴: **G 01 S 17/36**, G 01 S 7/48, G 06 F 15/36

(21) Numéro de dépôt: **84402371.3**

(22) Date de dépôt: **21.11.84**

(54) **Procédé de mesure de distance à ondes électromagnétiques adapté aux turbulences du milieu de propagation et télémètre mettant en oeuvre ce procédé.**

(30) Priorité: **01.12.83 FR 8319234**

(43) Date de publication de la demande: **02.10.85 Bulletin 85/40**

(45) Mention de la délivrance du brevet: **08.11.89 Bulletin 89/45**

(84) Etats contractants désignés: **CH DE GB LI SE**

(56) Documents cités:
**EP-A- 0 055 156**
**EP-A- 0 093 437**
**FR-A- 2 367 292**

**A. ANGOT: "Compléments de mathématiques", 6me édition, 1972, page 673, Masson, Paris, FR;**

(73) Titulaire: **SOCIETE D'ETUDES RECHERCHES ET CONSTRUCTIONS ELECTRONIQUES SERCEL, Avenue du Bel Air Zone Industrielle, F-44470 Carquefou (FR)**

(72) Inventeur: **Huilein, François, 31 rue François Bruneau, 44000 Nantes (FR)**
Inventeur: **Fribault, Gérard, 17 rue Thomas Maisonneuve, 44000 Nantes (FR)**

(74) Mandataire: **Martin, Jean-Jacques et al, Cabinet REGIMBEAU 26, Avenue Kléber, F-75116 Paris (FR)**

**EP 0 156 084 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne les télémètres, c'est-à-dire les appareils de mesure de distance à l'aide du temps de propagation aller-retour d'un signal entre deux points d'observation.

L'invention concerne plus précisément un procédé de mesure de distance, et un télémètre mettant en œuvre ce procédé, qui sont adaptés aux turbulences du milieu de propagation.

On a représenté schématiquement sur la figure 1 annexée un télémètre optique classique.

Comme cela est représenté sur la figure 1, de nombreux télémètres électro-optiques actuels utilisent une diode électroluminescente 1 disposée au premier point d'observation, qui est associée à un modulateur 2 contrôlé par un oscillateur 3 haute fréquence $F_T$ (de préférence plusieurs MHz, par exemple 15 MHz), et disposée au foyer d'un premier objectif 4, pour émettre un signal lumineux infra-rouge modulé en amplitude du rythme du signal haute fréquence généré par l'oscillateur 3. Le signal lumineux se présente sous la forme d'un faisceau mince qui peut donc se propager assez loin.

Un réflecteur triédrique 5 disposé au second point d'observation renvoie le faisceau parallèlement à lui-même, selon une symétrie dont le centre est très proche du sommet du trièdre réflecteur 5, vers un objectif 6 de réception, adjacent à l'objectif 4 précité.

Une photodiode 7 disposée au foyer du deuxième objectif 6, en général du type photodiode à avalanche (APD), attaque un étage amplificateur 8 qui délivre en sortie un signal électrique modulé déphasé d'un angle φ par rapport au signal de la modulation d'émission, l'angle φ étant lié au temps de propagation du signal, tel que:

$$\varphi = \frac{4\pi F_T D,}{c} \qquad (1)$$

relation dans laquelle:

. $F_T$ représente la fréquence de modulation de la diode électroluminescente 1,

. D représente la distance séparant le prisme 5 du télémètre (1,7) (soit la moitié du trajet parcouru par le rayonnement électromagnétique),

. c représente la vitesse de la lumière.

Pour déterminer la distance séparant les deux points d'observation avec une grande précision (de l'ordre d'1 mm) il faudrait en théorie une résolution de comptage très fine (de l'ordre de $3{,}3 \cdot 10^{-12}$ sec.).

Pour cette raison, alors que le signal de modulation est à haute fréquence, il est devenu classique d'effectuer la mesure de déphasage entre deux signaux de basse fréquence.

En premier lieu, on transpose le signal de modulation reçu généré en sortie de l'étage amplificateur 8 en un signal basse fréquence ($F_O$-$F_T$) (par exemple de l'ordre de 1500 Hz) en mélangeant, dans un mélangeur 9, le signal de modulation reçu avec celui d'un oscillateur local 10. On remarquera que le signal basse fréquence obtenu en sortie du mélangeur porte la même information de phase que le signal de modulation reçu à haute fréquence.

En second lieu, à partir des signaux des oscillateurs haute fréquence $F_T$3 et haute fréquence $F_O$10 locaux appliqués à un second mélangeur 11, on produit aussi un signal basse fréquence de référence.

Ce signal de référence, et le signal de l'oscillateur 10 haute fréquence local sont appliqués à un phasemètre numérique 16 tandis que le signal de modulation reçu transposé en basse fréquence à la sortie du mélangeur 9 est également appliqué au phasemètre 16, par l'intermédiaire d'un amplificateur basse fréquence 12, d'un étage à commande automatique de gain 13, d'un filtre passe bande $\Delta\nu_1$ 14 et d'un étage de mise en forme 15 transformant le signal analogique en sortie du filtre 14, en créneaux logiques, ces éléments étant adaptés de telle sorte que la mesure de phase soit indépendante de l'amplitude du signal de modulation reçu.

Le phasemètre numérique 16 détermine l'amplitude du déphasage φ entre le signal émis et le signal reçu. Les échantillons de phase $\varphi_i$ générés par le phasemètre 16 sont traités par l'organe de traitement 17 qui determine la moyenne arithmétique $\varphi_A$des échantillons:

$$\hat{\varphi}_A = \frac{1}{n} \sum_{i=1}^{n} \varphi_i \qquad (2)$$

Le symbole « » sera utilisé dans la présente demande pour désigner des valeurs estimées.

L'organe de traitement 17 détermine alors l'amplitude de la distance séparant les deux points d'observation sur la base de la relation (1).

Le signal produit par le dispositif de traitement 17 est digitalisé en vue d'une visualisation de la distance sur l'élément 18.

On notera par ailleurs que pour lever l'ambiguïté existant à chaque passage par 2π de l'angle φ, soit à chaque multiple de la distance $c/2F_T$, on opère classiquement des mesures à une ou plusieurs fréquences inférieures à la fréquence $F_T$. Ces dispositions bien connues de l'homme de l'art ne seront pas décrites par la suite.

On remarquera en outre que le filtre 14 possède classiquement une largeur de bande $\Delta\nu_1$ relativement faible (de l'ordre de 100 Hz) afin de réduire l'intensité du bruit de détection avant l'entrée du phasemètre 16. Les échantillons de phase $\varphi_i$ sont de se fait corrélés et il n'est pas nécessaire de les prélever avec une période inférieure à kT, T étant la période basse fréquence obtenue en sortie des mélangeurs et k un nombre tel que $kT < 1/\Delta\nu_1$.

La moyenne arithmétique $\hat{\varphi}_A$ constitue en fait un filtrage numérique complémentaire du filtrage analogique.

Il convient en outre de remarquer qu'avec un grand nombre de mesures élémentaires $\varphi_i$ fortement corrélées, la variance du résultat V ($\varphi_A$) tend vers une limite qui ne dépend plus du nombre d'échantillons mais seulement du temps de mesure $t_m$:

$$(3) \qquad V(\varphi_A) = \frac{k_o \, V(\varphi_i)}{t_m}$$

($k_o$ étant une constante).

La Demanderesse vient maintenant proposer un procédé et un télémètre perfectionnés qui permettent d'améliorer la précision de la mesure et la portée.

La Demanderesse a remarqué en effet que le milieu de propagation du signal entre les deux points d'observation est formé d'une façon générale de masses d'air en mouvement non homogènes en température, d'où il résulte un champ de gradients $\vec{n_i}$ d'indice de réfraction, d'amplitudes et de directions aléatoires dans le temps.

Bien que le trajet optique induit soit de ce fait sinueux, les calculs et l'expérimentation montrent que l'allongement du parcours entre les deux points d'observation est négligeable, donc les turbulences n'affectent pas la phase directement.

Par contre, les extinctions du signal provoquées par les turbulences réduisent erratiquement le rapport signal à bruit et de ce fait la précision de la mesure puisque

$$(4) \qquad V(\varphi_i) = \frac{k_1 \, N_A^2}{S^2}$$

relation dans laquelle:

$V(\varphi_i)$ représente la variance des échantillons de phase $\varphi_i$,
S représente le signal reçu d'amplitude aléatoire dans le temps,
$N_A$ représente la valeur efficace du bruit, et
$k_1$ représente une constante.

Le spectre de modulation d'amplitude du signal par les turbulences, qui sera dit spectre des turbulences par la suite, possède une largeur $\Delta F$.

L'expérimentation montre par ailleur que l'amplitude du signal exprimée en dB est une variable aléatoire suivant la loi Normale, caractérisée par une moyenne $\mu_s$ et un écart type $\sigma_s$.

On pourrait tenter d'améliorer les performances du télémètre en présence de turbulences, par exemple en utilisant des objectifs de plus grands diamètres afin simultanément d'accroître la moyenne $\mu_s$ du signal et de réduire l'écart type $\sigma_s$ de ce même signal.

Toutefois, une telle solution augmente en parallèle le volume, le poids et le prix de l'appareil. Par ailleurs, une telle solution n'améliore pas toujours la précision de la mesure.

La présente invention vient maintenant proposer un nouveau procédé de détermination de distance entre deux points qui sans changer la morphologie des télémètres classiques permet de diminuer la sensibilité de ceux-ci aux turbulences.

Pour cela la présente invention propose un procédé comprenant les étapes consistant à émettre un rayonnement électro-magnétique modulé par un oscillateur, à partir d'un premier point en direction d'un second, à détecter au premier point, sur un récepteur, le rayonnement électromagnétique réfléchi au second point, à comparer la phase d'un premier signal dérivé du signal de réception résultant de la détection du rayonnement électromagnétique et d'un second signal dérivé de la modulation d'émission, à générer des échantillons de phase $\varphi_i$ représentatifs de l'écart de phase entre les premier et second signaux, à générer un signal utile représentatif de la valeur de la distance à partir des échantillons de phase et à visualiser la distance, ledit procédé étant caractérisé par le fait qu'il comprend en outre les étapes consistant:

i) à générer un signal représentatif de la valeur de la variance instantanée $V(\varphi_i)$ des échantillons de phase $\varphi_i$

ii) à générer en tant qu'estimateur de la phase un signal intermédiaire correspondant à la moyenne $\widehat{\varphi_E}$ de n échantillons de phase $\varphi_i$ pondérés par leur variance instantanée

iii) à générer le signal utile représentatif de la valeur de la distance D sur la base de l'estimateur de la phase $\widehat{\varphi_E}$ et

iv) à visualiser cette valeur de la distance D.

Selon une autre caractéristique avantageuse de l'invention, l'on effectue une discrimination du signal de réception de telle sorte que l'intervalle de variation des amplitudes de signal admises sans distortion couvre l'étendue de la fonction de distribution des amplitudes du signal de réception, soit 4 à 6 fois l'écart type $\sigma_s$ du signal.

Selon une autre caractéristique avantageuse, l'on effectue un filtrage du signal de réception avec une bande passante équivalente $\Delta v_2$ supérieure à la largeur $\Delta F$ du spectre des turbulences.

De préférence, l'étape ii) précitée est opérée en considérant en tant que valeur représentative de la variance instantanée des échantillons de phase, un signal proportionnel à l'inverse du carré de la valeur du signal de réception bruité considéré sur une bande passante légèrement supérieure ou égale à la largeur du spectre des turbulences.

Les avantages apportés par l'invention seront explicités par la suite.

En variante, l'étape i) précitée est réalisée à l'aide d'une chaîne de détection prélevant un ensemble de $n_e$ échantillons à une cadence $n_e$ fois plus élevée que la cadence de prélèvement des n échantillons de phase $\varphi_i$.

Le procédé conforme à la présente invention comprend en outre avantageusement l'étape préliminaire consistant à commander un atténuateur optique inséré sur le trajet de propagation du rayonnement électromagnétique de telle sorte que la moyenne $\mu_s$ du signal S de réception soit inférieure à la limite supérieure de signal admise sans distortion h de $k_4$ fois l'écart type $\sigma_s$, $k_4$ étant compris entre 1 et 2.

Selon une caractéristique avantageuse le procédé comprend les étapes consistant:

a) à mesurer la valeur efficace du bruit $N_A$

b) à générer un signal représentatif de la moyenne

$\mu_s$ du signal et de l'écart type $\sigma_s$ sur la base d'une accumulation d'échantillons $y_i$ du signal de réception (en décibels), d'une part, et de la valeur d'une atténuation $A_j$ (en décibels) appliquée au rayonnement, d'autre part,

c) à générer un signal représentatif d'une estimation de la variance de la phase $\widehat{V(\varphi_E)}$ connaissant la valeur efficace du bruit, la moyenne $\mu_s$ et l'écart type $\sigma_s$.

Selon une autre caractéristique avantageuse de l'invention, le procédé comprend l'étape consistant à générer un signal représentatif d'une évaluation de l'écart type de la distance $\widehat{\sigma_D}$ proportionnel à la racine carrée de l'estimateur de la variance de phase $V(\varphi_E)$.

De préférence le procédé selon l'invention comprend de plus l'étape consistant à faire croître par incrément le gain M du récepteur jusqu'à ce que l'une des trois conditions suivantes soit satisfaite:

1) la polarisation du récepteur est otpimisée,

2) le gain M a atteint sa valeur maximale admise,

3) la moyenne $\mu_s$ du signal de réception a atteint une valeur optimum correspondant à la limite supérieure de signal admise sans distortion h diminuée de $k_4$ fois l'écart type $\sigma_s$, $k_4$ étant compris entre 1 et 2.

Dans un cas particulier, le récepteur est une photodiode à avalanche et la condition 1) ci-dessus est obtenue lorque le bruit $N_A$ avec l'éclairement ambiant, qui sera dit bruit ambiant par la suite, est environ le double du bruit $N_0$ des amplificateurs disposés dans le récepteur.

De préférence la génération des signaux représentatifs respectivement de l'estimation de la variance de la phase $\widehat{V(\varphi_E)}$ et de l'écart type de la distance $\widehat{\varphi_D}$ déduit de celle-ci, ainsi que la visualisation de cette dernière valeur sont réitérées après réglage du gain M du récepteur.

Selon une caractéristique avantageuse de l'invention, les étapes i) à iii) sont poursuivies jusqu'à ce que l'écart type $\sigma_D$ sur la distance soit inférieure à une valeur prédéterminée maximale $(\sigma_D)_M$ pour ainsi augmenter le nombre n d'échantillons prélevés et affiner la mesure.

La présente invention concerne également un télémètre comprenant:

— des moyens émetteurs associés à un oscillateur aptes à émettre en direction d'un point observé donné, un rayonnement électromagnétique modulé,

— des moyens récepteurs aptes à engendrer un signal de réception par détection du rayonnement électromagnétique réfléchi audit point observé,

— des moyens comparateurs aptes à comparer la phase d'un premier signal dérivé du signal de réception et d'un second signal dérivé de la modulation d'émission, pour générer des échantillons de phase $\varphi_i$ représentatifs de l'écart de phase entre les premier et second signaux,

— des moyens de détermination de la distance entre les moyens émetteurs et les moyens récepteurs à partir de échantillons de phase,

— des moyens de visualisation de la distance déterminée, ainsi que:

— des moyens aptes à générer un signal représentatif de la valeur de la variance instantanée $V(\varphi_i)$ des échantillons de phase $\varphi_i$,

— des moyens de traitement aptes à générer un signal intermédiaire dérivé de la moyenne $\widehat{\varphi_E}$ de n échantillons de phase $\varphi_i$ pondérés par ladite valeur représentative de leur variance instantanée,

— dans les moyens de détermination des moyens aptes à générer un signal utile représentatif de ladite distance sur la base dudit signal intermédiaire correspondant à la moyenne $\widehat{\varphi_E}$ pondérée, ledit signal utile étant fourni aux moyens de visualisation en tant qu'information représentative de la distance parcourue par le rayonnement.

De préférence, les moyens aptes à générer un signal représentatif de la valeur de la variance instantanée comprennent des moyens sensibles à la valeur du signal de réception bruité considéré sur une bande passante légèrement supérieure ou égale à la largeur du spectre des turbulences.

Selon une caractéristique avantageuse de l'invention, les moyens de traitement sont adaptés pour générer un signal représentatif de la moyenne estimée de la phase $\widehat{\varphi_E}$ sur la base de la relation:

$$\widehat{\varphi}_E = \frac{\sum_{i=1}^{n} \varphi_i \, Y_{i\Delta\nu_2}^2}{\sum_{i=1}^{n} Y_{i\Delta\nu_2}^2} \quad (5)$$

dans laquelle

$\varphi_i$ représente les échantillons de phase et

$Y_{i\Delta\nu 2}$ représente la valeur du signal de réception bruité issu d'un filtre récursif de bande passante $\Delta\nu_2$.

En variante, le télémètre peut comprendre dans la chaîne de détection un premier circuit de détection pour le prélèvement des échantillons de phase $\varphi_i$ et un deuxième circuit de détection apte à prélever un ensemble de $\underline{ne}$ échantillons à une cadence $\underline{ne}$ fois plus élevée que la cadence de prélèvement des n échantillons de phase $\varphi_1$ afin de déterminer leur variance instantanée $V(\varphi_i)$.

Selon une autre caractéristique avantageuse de l'invention le télémètre comprend en outre:

— un atténuateur optique, comprenant une pluralité de filtres, inséré sur le trajet de propagation du rayonnement électro-magnétique et

— des moyens de commande sensibles à la moyenne $\mu_s$ du signal de réception S et aptes à commander la position de l'atténuateur de telle sorte que cette moyenne soit inférieure à la limite supérieure du signal admise sans distortion de $k_4$ fois l'écart type $\sigma_s$, $k_4$ étant compris entre 1 et 2.

Selon une autre caractéristique avantageuse de l'invention, le télémètre comprend:

— des moyens pour générer un signal représentatif de la valeur efficace du bruit ambiant $N_A$,

— des moyens pour générer des signaux représentatifs de la moyenne $\mu_s$ et de l'écart type $\sigma_s$ du signal exprimé en dB,

— des moyens aptes à générer un signal représentatif de la variance estimée de la phase sur la base de la relation:

(6) $$\widehat{V(\varphi_E)} = \frac{k_2 N_A^2}{t_m} \cdot \frac{e^{-2a\,(\mu_s + a\,\sigma_s^2)}}{F\left[\dfrac{h - \mu_s - 2a\,\sigma_s^2}{\sigma_s}\right]}$$

dans laquelle $k_2$ et a sont des constantes et $t_m$ représente le temps de mesure, tandis que la notation F[ ] représente la fonction de répartition de la loi Normale de la variable centrée réduite et h désigne la limite supérieure de signal admise sans distortion,

— et des moyens sensibles audit signal et aptes à visualiser la variance estimée de la phase.

Avantageusement outre les deux dernières caractéristiques, les moyens aptes à générer des signaux représentatifs de la moyenne $\mu_s$ et de l'écart type $\sigma_s$ du signal exprimé en dB sont adaptés pour générer des signaux correspondants respectivement à

(7) $$\mu_s = \frac{1}{p} \sum_{i=1}^{p} (A_j + y_i)$$

et

(8) $$\sigma_s = \sqrt{\frac{1}{p} \sum_{i=1}^{p} (A_j + y_i)^2 - \mu_s^2}$$

relations dans lesquelles $y_i$ représente les échantillons du signal de réception bruité exprimé en dB et $A_j$ représente l'atténuation du signal due à l'atténuateur, associée respectivement aux échantillons $y_i$, tandis que q représente le nombre total d'échantillons pris en compte.

De préférence le télémètre conforme à l'invention comprend en outre:

— des moyens aptes à générer un signal représentatif d'une évaluation de l'écart type de la distance $\widehat{\sigma_D}$ proportionnel à la racine carrée de l'estimation de la variance de phase $\widehat{V(\varphi_E)}$ et

— des moyens aptes à visualiser l'écart type de la distance $\widehat{\sigma_D}$.

Le télémètre selon l'invention comprend avantageusement des moyens aptes à commander la croissance par incrément du gain M du récepteur jusqu'à ce que l'une des trois conditions suivantes soit satisfaite:

1) la polarisation du récepteur est optimisée,

2) le gain M a atteint sa valeur maximale admise,

3) la moyenne du signal $\mu_s$ a atteint une valeur optimum correspondant à la limite supérieure de signal admise sans distortion h diminuée de $k_4$ fois l'écart type $\sigma_s$, $k_4$ étant compris entre 1 et 2.

Dans un cas particulier le récepteur est une photodiode à avalanche et la condition 1) ci-dessus est obtenue lorsque le bruit ambiant $N_A$ est environ le double du bruit $N_O$ des amplificateurs.

Selon une autre caractéristique avantageuse de l'invention le télémètre comprend des moyens aptes à comparer l'écart type $\sigma_D$ avec une valeur prédéterminée maximale pour commander l'accumulation des échantillons et affiner la mesure tant que l'écart type est supérieur à ladite valeur prédéterminée.

D'autre caractéristiques et avantages de la présente invention apparaîtront à la lecture de la description détaillée qui va suivre et en regard des dessins annexés, donnés à titre d'exemple non limitatif, et sur lesquels la figure 1 ayant déjà été décrite:

— la figure 2 représente schématiquement sous forme de blocs fonctionnels la structure générale du télémètre conforme à la présente invention, en particulier des moyens de traitement, et

— les figures 3A, 3B et 3C qui doivent être considérées en série représentent un ordinogramme illustrant les étapes du processus de traitement conforme à la présente invention.

On va dans un premier temps décrire le processus de détermination de la distance D séparant les deux points d'observation considérés, conformément à la présente invention.

Comme cela a été évoqué précédemment, la distance D est déterminée sur la base du déphasage $\varphi$ à l'aide d'une relation tirée de la relation (1).

Toutefois, à la différence des télémètres classiques dans lesquels lèe meilleur estimateur de la phase était considéré comme étant formé de la moyenne arithmétique $\widehat{\varphi_A}$ de n échantillons de phase $\varphi_i$ (on rappelle que

$$\widehat{\varphi_A} = \frac{1}{n} \sum_{i=1}^{n} \varphi_i),$$

la présente invention propose maintenant de déterminer en tant qu'estimateur de la phase, pour l'évaluation de la distance D, la moyenne $\widehat{\varphi_E}$, des n éléments $\varphi_i$ pondérés par leur variance instantanée $V(\varphi_i)$, tel que:

$$(9) \quad \widehat{\varphi}_E = \frac{\sum_{i=1}^{n} \varphi_i \,/\, V(\varphi_i)}{\sum_{i=1}^{n} 1 \,/\, V(\varphi_i)}$$

On peut évaluer l'amélioration apportée par le traitement selon l'invention en calculant le rapport des variances, $V(\widehat{\varphi_A})$ et $V(\widehat{\varphi_E})$, de la moyenne arithmétique $\widehat{\varphi_A}$ et de la moyenne pondérée $\widehat{\varphi_E}$.

La variance de $\widehat{\varphi_A}$ et de $\widehat{\varphi_E}$ n'est pas constante d'un groupe de mesures à un autre. Toutefois, si le temps $t_m$ de prélèvement des échantillons est suffisamment grand on démontre que $V(\widehat{\varphi_A})$ et $V(\widehat{\varphi_E})$ tendent respectivement vers:

$$(10) \quad \widehat{V(\varphi_A)} = \frac{k_2 N_A^2}{t_m} \; e^{-2a(\mu_s - a\sigma_s^2)} \times F\left[\frac{-b+\mu_s - 2a\sigma_s^2}{\sigma_s}\right]$$

$$(6) \quad \widehat{V(\varphi_E)} = \frac{k_2 N_A^2}{t_m} \; \frac{e^{-2a(\mu_s + a\sigma_s^2)}}{F\left[\frac{h - \mu_s - 2a\sigma_s^2}{\sigma_s}\right]}$$

relations dans lesquelles:

$$a = \frac{\text{Log } 10}{20} = 0{,}115$$

$k_2$ est une constante,

b représente le seuil minimal de signal admis exprimé en dB,

h représente la limite supérieure de signal exprimée en dB admise sans distortion, $N_A$ représente la valeur efficace du bruit ambiant $N_A$,

$\mu_s$ représente la moyenne d'amplitude du signal,

$\sigma_s$ représente l'écart type du signal, et la notation F [ ] représente la fonction de répartition de la loi Normale de la variable centrée réduite.

Plus précisément, l'évaluation précipitée de l'amélioration apportée peut être déterminée en calculant pour différentes valeurs de l'écart type $\sigma_s$ le rendement $\eta$

$$(11) \quad \eta = \sqrt{V(\widehat{\varphi_A}) \,/\, V(\widehat{\varphi_E})}$$

en fonction de la moyenne $\mu_s$.

Sur la base des relations (6) et (10) on obtient en effet:

$$(12) \quad (12) \quad \eta = e^{0{,}026\,\sigma_s^2} \sqrt{F\left[\frac{-b+\mu_s - 0{,}23\sigma_s^2}{\sigma_s}\right] \times F\left[\frac{h-\mu_s - 0{,}23\sigma_s^2}{\sigma_s}\right]}$$

La principale difficulté pour la mise en œuvre du procédé précité et plus particulièrement pour la détermination de $\widehat{\varphi_E}$ sur la base de la relation (9) réside dans l'acquisition instantanée de la variante $V(\varphi_i)$ pour la mise en œuvre de la pondération.

En effet, l'estimateur de $V(\varphi_i)$ doit en théorie résulter d'un ensemble de <u>ne</u> échantillons prélevés à une cadence <u>ne</u> fois plus élevée que $\varphi_i$, (soit $\frac{ne}{kT}$).

Pour cela, les échantillons de phase $\varphi_i$ étant prélevés à une cadence de $\frac{1}{kT}$, on peut prévoir une deuxième chaîne de détection de basse fréquence $\frac{ne}{kT}$, et ayant une bande passante de $\frac{ne\,\Delta\nu_2}{k}$ afin que la corrélation entre mesures n'augmente pas l'incertitude de l'estimateur $\widehat{V(\varphi_i)}$.

On entend par deuxième chaîne de détection soit un ensemble mélangeur-amplificateur-étage à commande automatique de gain - filtre - étage de mise en forme - phasemètre, connecté en sortie de l'amplificateur 8, soit simplement un phasemètre dont les échantillons de phase sont séparés d'un incrément de phase de $\frac{2\pi\, ne}{k}$.

La Demanderesse vient cependant proposer un procédé permettant d'éviter le doublement précité de la chaîne de détection.

Pour cela, la Demanderesse a remarqué tout d'abord que la valeur efficace du bruit $N_A$ peut être considérée comme constante pendant les quelques secondes que dure la mesure.

En effet:

$$(13)\quad N_A^2 = N_0^2 + 2q\eta_q P_s M^\alpha \Delta\nu_2$$

relation dans laquelle:

$N_O$ représente le bruit des amplificateurs

$q = 1,6 \cdot 10^{-19}C$

M représente le facteur de multiplication de la photodiode 7,

$\alpha$ représente le coefficient d'ionisation généralement de l'ordre de 2,3,

$\eta_q$ représente le rendement quantique généralement de l'ordre de 0,3,

$P_s$ représente la puissance optique reçue par la photodiode et

$\Delta\nu_2$ représente la bande passante équivalente des filtres des circuits de détection.

Le coefficient M est maintenu constant par les circuits de contrôle pendant la mesure, le facteur $P_s$ est donc le seul susceptible de faire varier $N_A$.

Toutefois, le champ capté par l'optique de réception n'est que de quelques minutes (c'est-à-dire quelques mètres à 1 km). De ce fait la probabilité que l'éclairement de la zone «observée», qui correspond essentiellement à la lumière solaire, soit modifiée, pendant le temps limité de la mesure est très faible.

Par ailleurs, bien que le signal S n'existe pas seul, grâce au filtrage opéré par les circuits de détection, qui rend le bruit négligéable par rapport au signal, on peut écrire:

$$(14)\quad Y_{i\Delta\nu_2} \cong S$$

relation dans laquelle $Y_{i\Delta\nu_2}$ représente la valeur du signal bruité issu d'un filtre récursif de bande passante $\Delta\nu_2$.

Par conséquent, la Demanderesse a déterminé que pendant la mesure on peut considérer sur la base de la relation (4) que

$$(15)\quad V(\varphi_i) = k_1 N_A^2 / Y_{i\Delta\nu_2}$$

En combinant les relations (9) et (15) on obtient:

$$(5)\quad \widehat{\varphi_E} = \frac{\sum_{i=1}^{n} \varphi_i \; Y_i^2 \; \Delta\nu_2}{\sum_{i=1}^{n} Y_i^2 \Delta\nu_2}$$

La détermination de l'estimateur de phase $\widehat{\varphi_E}$ sur la base de la relation (5), et donc la détermination de la distance D est ainsi simplifiée et rendue possible à l'aide de télémètres classiques.

On va maintenant décrire plus en détail le télémètre conforme à la présente invention en regard des figures 2, 3A, 3B et 3C.

Comme cela est représenté sur la figure 2, l'unité de traitement UC conforme à l'invention est sensible d'une part au signal de sortie du phasemètre 16 représentant le déphasage $\varphi_i$, d'autre part à un signal prélevé en sortie de l'amplificateur 12 et représentatif soit du signal bruité, soit du bruit seul, en fonction de l'état, allumé ou éteint, de la diode électroluminescente d'émission 1.

On remarquera que cette dernière est reliée au modulateur 2 par l'intermédiaire d'un interrupteur 119 commandé par une porte 123.

Lorsque le signal appliqué à la porte 123 commande l'état fermé de l'interrupteur 119 la diode 1 est alimentée et la chaîne de mesure est sensible au signal bruité.

Inversement, lorsque le signal appliqué à la porte 123 commande l'état ouvert de l'interrupteur 119, la chaîne de mesure est sensible au bruit seul, la diode n'étant pas alimentée.

Le second signal représentatif du signal bruité ou du bruit seul auquel est sensible l'unité centrale de traitement UC est appliqué à celle-ci par l'intermédiaire d'un ensemble série comprenant d'une part un étage échantillonneur 100 relié à la sortie de l'amplificateur 12 et qui détecte les crêtes du signal sinusoïdal apparaissant en sortie de ce dernier, d'autre part un convertisseur Analogique/Numérique 101.

Par ailleurs, pour une gamme d'utilisation de télémètres s'étendant de quelques mètres à plusieurs kilomètres, la dynamique de puissance optique est supérieure à $10^6$ (soit 120 dB) sur le signal.

Pour cette raison, comme cela est représenté schématiquement sur la figure 2, le télémètre comprend un atténuateur optique variable inséré sur le trajet du rayonnement électromagnétique, apte à faire varier par pas la puissance optique du signal pour éviter que les circuits électroniques ne soient saturés par un signal d'amplitude supérieure à h.

Plus précisément, l'atténuateur optique comprend un ensemble de filtres gris 120 déplaçables en rotation en regard de la diode de réception 7, sous l'actionnement d'un moteur 121. La position des filtres 120 est contrôlée par un codeur 122.

La structure de l'unité centrale UC représentée schématiquement sur la figure 2 sera décrite en liaison avec l'ordinogramme des figures 3A à 3C.

Comme cela est représenté sur la figure 3A par l'étape 200 (ORDRE MESURE DISTANCE SUR CLAVIER) le processus de mesure de la distance D est initialisé par l'intervention d'un opérateur sur le clavier du télémètre.

Après une telle intervention, l'unité centrale de traitement UC du télémètre procède dans un premier temps à une mesure du bruit en lumière ambiante. Comme cela sera explicité par la suite cette mesure du bruit est utilisée pour évaluer l'écart type $\sigma_D$ de la distance D.

Sur la figure 2, le processus de mesure du bruit peut être illustré schématiquement par liaison du convertisseur 101 et du bloc fonctionnel

$$114\left(\sum_{i=1}^{m} x_i^2\right)$$

par l'intermédiaire de l'interrupteur 102.

Pour cette mesure, à l'étape 201 (LED = O & $A_j$ = O) l'unité centrale commande d'une part l'ouverture de l'interrupteur 119 et donc l'extinction de la diode 1, d'autre part le positionnement des filtres gris 120 pour une atténuation minimum du signal.

A l'étape 202 suivante l'unité centrale détermine la valeur efficace $N_A$ du bruit ambiant sur la base de la relation

$$(16) \qquad N_A^2 = \frac{1}{m} \sum_{i=1}^{m} x_i^2 ,$$

relation dans laquelle:

$X_i$ représente les échantillons de bruit ambiant.

Afin de faire l'acquisition rapide des échantillons $X_i$ de bruit non corrélés le prélèvement de ces échantillons est opéré dans la bande $\Delta f$ à chaque période T.

La valeur de m (nombre d'échantillons) est déterminée selon un compromis entre la précision voulue sur la variance $V(\varphi_E)$ et le temps d'acquisition des $X_i$ acceptés.

La sommation des échantillons $X_i^2$ est opérée par les moyens référencés schématiquement 114 sur la figure 2.

On va ensuite procéder à une évaluation de la moyenne $\mu_s$ et de l'écart type $\sigma_s$ des amplitudes du signal $y_i$ en dB.

Sur la figure 2 ce processus peut être illustré schématiquement par l'établissement d'une liaison entre le convertisseur 101 et le bloc fonctionnel 103 (Rejet $y_i > h$) par l'intermédiaire de l'interrupteur 102.

Pour mesurer $\mu_s$ et $\sigma_s$ correctement il ne faut pas avoir des dépassements de h qui créent des distortions d'amplitude.

Lorsque la durée d'exécution de l'ensemble du programme n'est pas critique on peut commencer à accumuler les échantillons de tension après quelques secondes pendant lesquelles tout dépassement de signal entraîne un incrément d'atténuation optique $\Delta A$ par actionnement du filtre 120.

On obtient alors:

$$(17) \qquad \mu_s = \frac{1}{p} \sum_{i=1}^{p} y_i$$

et

$$(18) \qquad \sigma_s = \sqrt{\frac{1}{p} \sum_{i=1}^{p} y_i^2 - \mu_s^2}$$

Cependant, lorsque la duréee d'exécution du programme de mesure est à minimiser, la commande du filtre 120 peut être accélérée par un dispositif de contrôle 117 recevant l'information de dépassement de h et la position du filtre atténuateur. Par exemple si le filtre 120 est un disque tournant à échelle de gris progressive, un codeur incrémental peut donner un nombre correspondant à l'atténuation $A_j$.

A chaque dépassement de h le disque tourne de j incréments correspondant à une atténuation $\Delta A$. Pendant les intervalles de temps où $y_i$ est inférieur à h, on effectue deux sommations:

$$(19) \qquad W_p = \sum_{i=1}^{p} (A_j + y_i)$$

et

$$(20) \qquad Z_p = \sum_{i=1}^{p} (A_j + y_i)^2$$

Par ailleurs, l'atténuation notée $\Delta A$ doit être choisie de telle sorte que le nombre maximum de mesures d'amplitude élevée supprimées par le détecteur de seuil h, soit faible devant p.

Cette condition étant satisfaite, les relations (17) et (18) deviennent

$$(7) \qquad \mu_s = \frac{1}{p} \sum_{i=1}^{p} (A_j + y_i)$$

et

$$(8) \qquad \sigma_s = \sqrt{\frac{1}{p} \sum_{i=1}^{p} (A_j + y_i)^2 - \mu_s^2}$$

Pour cela comme représenté sur la figure 3A à l'étape 203 (LED = 1 & $A_j$ = O) la diode émettrice 1 est excitée par fermeture de l'interrupteur 119, l'atténuation du signal provoqué par les filtres 120 étant toujours minimum.

A l'étape 204 suivante ($y_i > h$) (réalisée par les moyens référencés schématiquement 103 sur la figure 2) on teste si la valeur $y_i$ du signal bruité est supérieure ou non à une valeur h correspondant à la limite supérieure de signal admise sans distortion.

Si la limite supérieure h est dépassée l'étape 204 est suivie d'une étape 205 ($A_j = A_{j-1} + \Delta A$) au cours de laquelle le moteur 121 alimenté par le bloc de contrôle 117 déplace les filtres gris 120 pour augmenter d'un pas l'atténuation optique du signal.

Après chaque incrémentation de l'atténuation le test de l'étape 204 est réitéré. On accumule ainsi les signaux $y_i$ d'amplitude inférieure à la limite h, associés à une atténuation $A_j$ et après avoir transités par un filtre récursif $\Delta v_2$ (104) les signaux bruités $y_i$ sont comparés à un seuil prédéterminé b à l'étape 206.

Si la valeur du signal bruité est inférieure au seuil b, une alarme est déclenchée à l'étape 207, avertissant l'opérateur du fait que le niveau de signal est trop faible pour autoriser une mesure correcte.

Par contre lorsque la valeur du signal bruité est supérieure au seuil b, l'étape 206 précitée est suivie des étapes 208 et 209.

A l'étape 208 les moyens 113 de l'unité centrale déterminent un signal représentant la valeur

$$(19) \quad W_p = \sum_{i=1}^{p} (Aj + y_i)$$

tandis qu'à l'étape 209 les moyens 112 de l'unité centrale déterminent un signal représentant la valeur

$$(20) \quad Z_p = \sum_{i=1}^{p} (Aj + y_i)^2$$

relations dans lesquelles $A_j$ représente l'amplitude de l'atténuation introduite par les filtres 120.

Sur la figure 2 ce processus peut être illustré schématiquement par l'établissement d'une liaison entre d'une part le bloc fonctionnel 105 et d'autre part les blocs fonctionnels 112 et 113, par l'intermédiaire de l'interrupteur 106.

Les étapes 208 et 209 sont alors suivies d'une étape 210, au cours de laquelle les moyens référencés 115 sur la figure 2, qui sont reliés aux blocs 112 et 113, déterminent d'une part la moyenne $\mu_s$, d'autre part l'écart type $\sigma_s$ sur la base des relations

$$(21) \quad \mu_s = \frac{W_p}{p}$$

et

$$(22) \quad \sigma_s^2 = \frac{Z_p}{p} - \mu_s^2$$

tirées respectivement des relations (7) et (8) et dans lesquelles p représente le nombre d'échantillons pris en compte aux étapes 208 et 209.

A l'étape 211 suivante l'unité centrale UC procède à une estimation de la variance de la phase $\varphi_E$ sur la base de la relation

$$(6) \quad \widehat{V(\varphi_E)} = \frac{k_2 N_A^2}{t_m} \frac{e^{-2a(\mu_s + a\sigma_s^2)}}{F\left[\dfrac{h-\mu_s - 2a\sigma_s^2}{\sigma_s}\right]}$$

Les moyens référencés 116 sur la figure 2 procèdent alors à l'étape 212 à une préestimation et à une visualisation de l'écart type sur la distance $\sigma_{1D}$ en générant un signal représentant

$$(23) \quad \widehat{\sigma_{1D}} = k_3\sqrt{\widehat{V(\varphi_E)}}$$

En fonction de la valeur visualisée, l'opérateur décide s'il doit ou non poursuivre la mesure.

Le cas échéant l'opérateur peut modifier le temps de la mesure $t_m$ ou les paramètres de la liaison optique (par exemple le nombre de prismes).

Dans l'affirmative l'étape 212 est suivie d'une étape de test 213 au cours de laquelle la valeur estimée $\widehat{\sigma_{1D}}$ de l'écart type est comparée à une valeur maximum prédéterminée $(\sigma_D)_M$ de l'écart type.

Si la valeur estimée $\widehat{\sigma_{1D}}$ est inférieure à la valeur maximum $(\sigma_D)_M$ l'étape 213 est suivie de l'étape 214 au cours de laquelle les moyens 117 du télémètre ajustent la position des filtres gris 120 de telle sorte que la moyenne $\mu_s$ respecte la relation

$$(24) \quad \mu_s = h - k_4\sigma_s,$$

dans laquelle h représente la limite supérieure de signal admise sans distortion et $k_4$ représente un coefficient compris entre 1 et 2 qui dépend de la duréee moyenne des dépassements de h et de la temporisation de suspension de validation de mesures permettant aux circuits de revenir dans leur plage de fonctionnement linéaire.

L'étape 214 est suivie de l'étape 226.

Si par contre la valeur estimée de l'écart type $\widehat{\sigma_{1D}}$ est supérieure à la valeur maximum $(\sigma_D)_M$ l'étape 213 conduit à un réglage du gain M de la photodiode à avalanche 7 sous controle des moyens 118 de l'unité centrale UC.

La décision d'allonger le programme de mesure pour faire croître M, qui est établi à une valeur minimum $M_0$ lors de l'initialisation du système, est donc déterminée en fonction de la valeur de l'écart type.

Pour ajuster M à la valeur optimum si $\widehat{\sigma_{1D}} > (\sigma_D)_M$ on procède tout d'abord à une mesure du bruit d'obscurité.

L'unité centrale UC commande l'interrupteur 102 (figure 2) pour relier le convertisseur 101 et les moyens 114.

Par ailleurs à l'étape 215 (LED = O & $A_j = A_M$) d'une part on éteint la diode émettrice 1, par ouverture de l'interrupteur 119, d'autre part on actionne les filtres 120 par commande du moteur 121 pour provoquer une atténuation maximum $A_M$ du signal.

On détermine alors à l'étape 216 la valeur du bruit dû aux amplificateurs à l'aide de la relation:

$$(25) \quad N_O^2 = \frac{1}{m} \sum_{i=1}^{m} X_i^2$$

Puis à l'étape 217 tout en maintenant la diode émettrice 1 éteinte on actionne à nouveau le moteur 121 et les filtres 120 pour obtenir une atténuation minimum du signal optique de façon à mesurer le bruit ambiant $N_A$.

L'étape 217 est suivie de l'étape 219 au cours de laquelle l'unité centrale teste si le rapport $N_A/N_O$ est ou non supérieur à 2.

Si OUI la polarisation de la photodiode à avalanche est optimisée, et il n'est donc pas nécessaire de faire croître M et l'étape 219 est suivie de l'étape 226 précitée.

Si NON la polarisation de la photodiode n'étant pas optimisée l'étape 219 est suivie de l'étape 220 ($M_j = M_{j-1} + \Delta M$) au cours de laquelle on fait croître le gain M par incréments $\Delta M$, M et $\Delta M$ étant exprimés en dB.

A l'étape suivante 221 on détermine de façon similaire à l'étape 202 précitée, la valeur efficace du bruit ambiant $N_A$ à l'aide de la relation:

$$(16) \quad N_A^2 = \frac{1}{m} \sum_{i=1}^{m} X_i^2$$

Enfin à l'étape 223 l'unité centrale détermine la valeur de la moyenne $\mu_s$ à l'aide de la relation

$$(26) \quad \mu_{sj} = Mj - Mo + \mu_{sj-1}$$

A l'étape 224 l'unité centrale teste si le facteur Mj a atteint la valeur maximum admise $M_M$.

Si tel est le cas l'étape 224 est suivie de l'étape 226.

Si par contre M est inférieur à $M_M$ l'unité centrale teste à l'étape 225 si la moyenne du signal $\mu_{sj}$ a atteint la valeur optimum (32) $\mu_{sj} = h\text{-}k_4\,\sigma_s$.

Si cette égalité est remplie l'étape 225 est suivie de l'étape 226.

Le réglage du gain M est terminé.

Dans le cas contraire, après l'étape 225, l'unité centrale réitère le test de l'étape 219.

L'unité centrale UC procède alors à une nouvelle estimation $\widehat{\sigma_{2D}}$ de l'écart type de la distance.

A l'étape 226 l'unité centrale détermine la valeur estimée de la variance sur la mesure de déphasage $\widehat{V(\varphi_E)}$ sur la base de la relation (6).

Les moyens 116 de l'unité centrale UC procèdent alors à l'étape 227 à une nouvelle estimation et à une visualisation de la valeur de l'écart type $\sigma_{2D}$ sur la base de la relation:

$$(27) \quad \widehat{\sigma_{2D}} = k_3 \sqrt{\widehat{V(\varphi_E)}}$$

Il reste alors à rechercher la valeur de la moyenne pondérée selon l'invention et de l'écart type $\sigma_D$ sur la distance.

Pour cela à l'étape 228 suivant l'étape 227 deux paramètres W et Z sont mis à zéro.

Le bloc fonctionnel 103 (figure 2) est à nouveau relié au convertisseur 101 par l'intermédiaire de l'interrupteur 102 et les moyens 107 et 108 sont reliés aux moyens 105 par l'intermédiaire de l'interrupteur 106.

Puis à l'étape 229 les moyens 103 de l'unité centrale UC vérifient que la valeur du signal $y_i$ (en dB) n'est pas supérieure à la limite supérieure de signal admise sans distortion, h.

Si toutefois la valeur du signal $y_i$ est supérieure à la limite h, le test 229 est réitéré, et les échantillons $y_i$ de signal correspondants ne sont pas accumulés.

Si par contre la valeur du signal $y_i$ n'est pas supérieure à la limite h, le test 229 est suivi de l'étape 230 au cours de laquelle les moyens 105 de l'unité centrale testent si la valeur du signal $y_i$ est inférieur au seuil b.

Si OUI après le test 230 l'unité centrale réitère l'étape 229.

Si NON les échantillons $Y_i$ sont accumulés et l'étape 230 est suivi des étapes 231 et 232.

Au cours de celles-ci les moyens référencés 107 et 108 sur la figure 2 déterminent respectivement des signaux représentant les paramètres

$$(28) \quad Z_i = Z_{i-1} + Y_{i\Delta\nu_2}^2$$

et

$$(29) \quad W_i = W_{i-1} + \varphi_i Y_{i\Delta\nu_2}^2$$

Puis les moyens 109 déterminent la variance de la phase estimée $V(\widehat{\varphi_E})$ à l'étape 233 en générant un signal qui représente:

$$(30) \quad V(\widehat{\varphi_E}) = \frac{k_2 N_A^2}{t_m Z_n} = \frac{k_2 N_A^2}{t_m \sum_{i=1}^{n} Y_{i\Delta\nu_2}^2}$$

Les moyens 109 et 111 de l'unité centrale déterminent alors à l'étape 234 une estimation de la valeur de l'écart type

$$(23)\qquad \widehat{\sigma_D} = k_3 \sqrt{V(\widehat{\varphi_E})}.$$

Par ailleurs après l'étape 233 l'unité centrale teste à l'étape 235 si la valeur de l'écart type $\sigma_D$ est inférieure à une valeur prédéterminée maximale $(\sigma_D)_M$ de l'écart type.

Si tel est le cas la valeur de l'écart type étant acceptable l'étape 235 est suivie de l'étape 237.

Si par contre la valeur de l'écart type $\sigma_D$ est supérieure à la valeur prédéterminée $(\sigma_D)_M$ le test 235 est suivie de l'étape 236. Au cours de cette dernière l'unité centrale vérifie que le temps de la mesure $t_m$ n'a pas dépassé le temps maximum prédéterminé.

Si le temps de mesure $t_m$ est bien inférieur au temps maximum imposé $t_{mM}$ le test 236 est suivi de l'étape 229 précitée qui est réitérée.

Si par contre le temps de mesure prédéterminé est dépassé, l'étape 236 est suivie là encore de l'étape 237 précitée.

Au cour de celle-ci les moyens 111 déterminent et visualisent d'une part la valeur de la distance D, d'autre part la valeur de l'écart type sur la distance sur la base des relations:

$$(31)\qquad D = k_5\, W_n / Z_n$$

(tirée de la relation (5) et

$$(32)\qquad \sigma_D = k_6 \frac{N_A}{\sqrt{Z_n}}$$

(tirée des relations (23) et (30).

On remarquera qu'il n'est pas impératif de connaître le gain M avec précision pour rechercher l'optimum de celui-ci, toutefois comme cela a été précédemment évoqué la valeur du gain M est utilisée pour l'évaluation de la moyenne à l'étape 223 et pour respecter la condition $M < M_M$ testée à l'étape 224. Pour ces raisons, il est donc souhaitable tout de même de connaître M avec précision.

Cependant M est une fonction non linéaire de la tension de polarisation de la photodiode ainsi que de la température ambiante. De ce fait les incréments de M, utilisés à l'étape 220 ne peuvent pas être calibrés avec précision.

On pourrait obtenir une bonne précision sur M en modulant la diode électroluminescente 1, avec extinction, et en mesurant le signal obtenu à chaque passage dans la boucle d'incrémentation de M.

Cependant, il s'avère préférable de mettre en mémoire morte ou mémoire non volatile (130, figure 2) une table de correspondance M en fonction de la tension de polarisation U (APD) et en fonction de la température $\theta$.

Un capteur de température 131 placé près de la photodiode à avalanche 7 délivre alors un signal électrique à un convertisseur analogique/digital qui est connecté au bus de données du microprocesseur contrôlant l'unité centrale UC. Selon le gain «M» voulu et demandé par le microprocesseur, un code numérique est alors envoyé à une alimentation programmable en tension polarisant la photodiode.

**Revendications**

1. Procédé de détermination de la distance entre deux points, comprenant les étapes consistant à émettre un rayonnement électromagnétique modulé par un oscillateur (2), à partir d'un premier point en direction d'un second, à détecter au premier point, sur un récepteur (7), le rayonnement électromagnétique réfléchi au second point, à comparer la phase d'un premier signal dérivé du signal de réception résultant de la détection du rayonnement électromagnétique et d'un second signal dérivé de la modulation d'émission, à générer des échantillons de phase $\varphi_i$ représentatifs de l'écart de phase entre les premier et second signaux, à générer un signal utile réprésentatif de la valeur de la distance à partir des échantillons de phase et à visualiser la distance, caractérisé par le fait qu'il comprend en outre les étapes consistant:

i) à générer un signal représentatif de la valeur de la variance instantanée $V(\varphi_i)$ des échantillons de phase $\varphi_i$

ii) à générer en tant qu'estimateur de la phase un signal intermédiaire correspondant à la moyenne $\widehat{\varphi_E}$ de n échantillons de phase $\varphi_i$ pondérés par leur variance instantanée

iii) à générer le signal utile représentatif de la valeur de la distance D sur la base de l'estimateur de la phase $\widehat{\varphi_E}$ et

iv) à visualiser cette valeur de la distance D.

2. Procédé de détermination de la distance entre deux points selon la revendication 1, caractérisé par le fait que l'on effectue une discrimination du signal de réception de telle sorte que l'intervalle de variation des amplitudes de signal admise sans distortion couvre l'étendue de la fonction de distribution des amplitudes du signal de réception, soit 4 à 6 fois l'écart type $\sigma_s$ du signal.

3. Procédé de détermination de la distance entre deux points selon l'une des revendications 1 ou 2, caractérisé par le fait que l'on effectue un filtrage du signal de réception avec une bande passante équivalente $\Delta\nu_2$ supérieure à la largeur $\Delta F$ du spectre des turbulences.

4. Procédé de détermination de la distance entre deux points selon l'une des revendications 1 à 3, caractérisé par le fait que l'étape ii) précitée est opérée en considérant en tant que valeur représentative de la variance instantanée des échantillons de phase $V(\varphi_i)$, un signal proportionnel à l'inverse du carré de la valeur $Y_i$ du signal de réception bruité considéré sur une bande passante légèrement supérieure ou égale à la largeur du spectre des turbulences.

5. Procédé de détermination de la distance entre deux points selon l'une des revendications 1 à 3, caractérisé par le fait que l'étape i) précitée est réalisée à l'aide d'une chaîne de détection prélevant un ensemble de $n_e$ échantillons à une cadence $n_e$ fois plus élevée que la cadence de prélèvement des n échantillons de phase $\varphi_i$.

6. Procédé de détermination de la distance entre deux points selon l'une des revendications 1 à 5, caractérisé par le fait qu'il comprend en outre l'étape préliminaire (214) consistant à commander un atténuant optique (120) inséré sur le trajet de propagation du rayonnement électromagnétique de telle sorte que la moyenne $\mu_s$ du signal de réception soit inférieure à la limite supérieure de signal admise sans distortion h de $k_4$ fois l'écart type $\sigma_s$, $k_4$ étant compris entre 1 et 2.

7. Procédé de détermination de la distance entre deux points selon l'une des revendications 1 à 6, caractérisé par le fait qu'il comprend les étapes consistant:

a) à mesurer la valeur efficace du bruit $N_A$,

b) à générer un signal représentatif de la moyenne $\mu_s$ du signal et de l'écart type $\sigma_s$ sur la base d'une accumulation d'échantillons $y_i$ du signal de réception d'une part, et de la valeur d'une atténuation $A_j$ appliquée au rayonnement d'autre part, et

c) à générer un signal représentatif d'une estimation de la variance de la phase $\widehat{V(\varphi_E)}$ connaissant la valeur efficace du bruit, la moyenne $\mu_s$ et l'écart type $\sigma_s$.

8. Procédé de détermination de la distance entre deux points selon la revendication 7, caractérisé par le fait que le procédé comprend les étapes consistant à générer un signal représentatif d'une évaluation de l'écart type de la distance $\widehat{\sigma_{1D}}$ proportionnel à la racine carrée de l'estimateur de la variance de phase $\widehat{V(\varphi_E)}$ et à visualiser cet écart type.

9. Procédé de détermination de la distance entre deux points selon l'une des revendications 1 à 8, caractérisé par le fait qu'il comprend de plus l'étape consistant à faire croître par incrément le gain M du récepteur (7) jusqu'à ce que l'une des trois conditions suivantes soit satisfaite:

1) la polarisation du récepteur (7) est optimisée,

2) le gain M a atteint la valeur maximale admise,

3) la moyenne $\mu_s$ du signal de réception a atteint une valeur optimum correspondant à la limite supérieure du signal admise sans distortion h diminuée de $k_4$ fois l'écart type $\sigma_s$, $k_4$ étant compris entre 1 et 2.

10. Procédé de détermination de la distance entre deux points selon la revendication 9, caractérisé par le fait que le récepteur est une photodiode à avalanche (7) et la condition 1) est obtenue lorsque le bruit ambiant $N_A$ est environ le double du bruit $N_O$ des amplificateurs disposés dans le récepteur.

11. Procédé de détermination de la distance entre deux points selon l'une des revendications 7, 8 et 9 prises en combinaison, caractérisé par le fait que la génération des signaux représentatifs respectivement de l'estimation de la variance de la phase $\widehat{V(\varphi_E)}$ et de l'écart type de la distance $\sigma_D$, ainsi que la visualisation de cette dernière valeur sont réitérées après réglage du gain M du récepteur.

12. Procédé de détermination de la distance entre deux points selon l'une des revendications 1 à 11, caractérisé par le fait que les étapes i) à iii) sont poursuivies jusqu'à ce que l'écart type $\sigma_{2D}$ sur la distance soit inférieur à une valeur prédéterminée maximale $(\sigma_D)_M$ pour ainsi augmenter le nombre n d'échantillons prélevés et affiner la mesure.

13. Télémètre en particulier pour la mise en œuvre du procédé selon l'une des revendications 1 à 12, du type comprenant:

— des moyens émetteurs (1) associés à un oscillateur (2) aptes à émettre en direction d'un point observé donné, un rayonnement électromagnétique modulé,

— des moyens récepteurs (7, 8, 9, 12) aptes à engendrer un signal de réception par détection du rayonnement électromagnétique réfléchi audit point observé,

— des moyens comparateurs (16) aptes à comparer la phase d'un premier signal dérivé du signal de réception et d'un second signal dérivé de la modulation d'émission, pour générer des échantillons de phase $\varphi_i$ représentatifs de l'écart de la phase entre les premier et second signaux,

— des moyens de détermination (107, 108, 110, 111) de la distance entre les moyens émetteurs et les moyens récepteurs à partir des échantillons de phase,

— des moyens de visualisation (111) de la distance déterminée, caractérisé par le fait qu'il comprend en outre:

— des moyens (107, 108) aptes à générer un signal représentatif de la valeur de la variance instantanée $V(\varphi_i)$ des échantillons de phase $\varphi_i$,

— des moyens de traitement (110) aptes à générer un signal intermédiaire correspondant à la moyenne $\widehat{\varphi_E}$ de n échantillons de phase $\varphi_i$ pondérés par ladite valeur représentative de leur variance instantanée,

— dans les moyens de détermination, des moyens (111) aptes à générer un signal utile représentatif de ladite distance sur la base dudit signal intermédiaire correspondant à la moyenne $\widehat{\varphi_E}$ pondérée, ledit signal utile étant fourni aux moyens de visualisation en tant qu'information représentative de la distance parcourue par le rayonnement.

14. Télémètre selon la revendication 13, caractérisé par le fait que les moyens récepteurs comprennent une chaîne de détection dont les éléments sont adaptés de telle sorte que l'intervalle de variation des amplitudes de signal admises sans distortion couvre l'étendue de la fonction de distribution des amplitudes du signal de réception soit 4 à 6 fois l'écart type $\sigma_s$ du signal.

15. Télémètre selon l'une des revendications 13 ou 14, caractérisé par le fait que la bande passante équivalente $\Delta\nu_2$ des filtres compris dans la chaîne de détection est supérieure à la largeur $\Delta F$ du spectre des turbulences.

16. Télémètre selon l'une des revendications 13 à 15, caractérisé par le fait que les moyens (107, 108) aptes à générer un signal représentatif de la valeur de la variance instantanée $V(\varphi_i)$ comprennent

des moyens sensibles à la valeur du signal de réception bruité $Y_i$ considéré sur une bande passante légèrement supérieure ou égale à la largeur du spectre des turbulences.

17. Télémètre selon l'une des revendications 13 à 16, caractérisé par le fait que les moyens de traitement (110) sont adaptés pour générer un signal représentatif de la moyenne estimée de la phase $\widehat{\varphi_E}$ sur la base de la relation:

$$(5)\quad \widehat{\varphi}_E = \frac{\sum_{i=1}^{n} \varphi_i \, Y_{i\Delta\nu_2}^2}{\sum_{i=1}^{n} Y_{i\Delta\nu_2}^2}$$

dans laquelle $\varphi_i$ représente les échantillons de phase et $Y_{i\Delta\nu_2}$ représente la valeur du signal de réception bruité issu d'un filtre récursif de bande passante $\Delta\nu_2$.

18. Télémètre selon l'une des revendications 13 à 15, caractérisé par le fait qu'il comprend dans la chaîne de détection un premier circuit de détection pour le prélèvement des échantillons de phase $\varphi_i$ et un deuxième circuit de détection apte à prélever un ensemble de $n_e$ échantillons à une cadence $n_e$ fois élevée que la cadence de prélèvement des n échantillons de phase $\varphi_i$ afin de déterminer leur variance instantanée $V(\varphi_i)$.

19. Télémètre selon l'une des revendications 13 à 18, caractérisé par le fait qu'il comprend en outre:

— un atténuateur optique (120), comprenant une pluralité de filtres, inséré sur le trajet de propagation du rayonnement électromagnétique et

— des moyens de commande (117) sensibles à la moyenne $\mu_s$ du signal de réception reçu en dB et aptes à commander la position de l'atténuateur de telle sorte que cette moyenne soit inférieure à la limite supérieure du signal h admise sans distortion de $k_4$ fois l'écart type $\sigma_s$, $k_4$ étant compris entre 1 et 2.

20. Télémètre selon l'une des revendications 13 à 19, caractérisé par le fait qu'il comprend:

— des moyens (114) pour générer un signal représentatif de la valeur efficace du bruit ambiant $N_A$,

— des moyens (112, 113, 115) pour générer des signaux représentatifs de la moyenne $\mu_s$ et de l'écart type $\sigma_s$ du signal,

— des moyens (116) aptes à générer un signal représentatif de la variance estimée de la phase sur la base de la relation:

$$(6)\quad \widehat{V(\varphi_E)} = \frac{k_2 N_A^2}{t_m} \; \frac{e^{-2a\,(\mu_s + a\,\sigma_s^2)}}{F\left[\dfrac{h - \mu_s - 2a\,\sigma_s^2}{\sigma_s}\right]}$$

dans laquelle $k_2$ et a sont des constantes et $t_m$ représente le temps de mesure, F [ ] représente la fonction de répartition de la loi Normale de la variable centrée réduite, et h représente l'amplitude maximale admise sans distortion,

— et des moyens sensibles audit signal et aptes à visualiser une information dérivée de la variance estimée de la phase.

21. Télémètre selon la revendication 20 prise en combinaison avec la revendication 19, caractérisé par le fait que les moyens (112, 113, 115) aptes à générer des signaux représentatifs de la moyenne $\mu_s$ du signal et de l'écart type $\sigma_s$ du signal sont adaptés pour générer des signaux correspondant respectivement à

$$(7)\quad \mu_s = \frac{1}{p} \sum_{i=1}^{p} (A_j + y_i)$$

et

$$(8)\quad \sigma_s = \sqrt{\frac{1}{p} \sum_{i=1}^{p} (A_j + y_i)^2 - \mu_s^2}$$

relations dans lesquelles $y_i$ représente les échantillons du signal de réception bruité exprimé en dB et $A_j$ représente l'atténuation du signal due à l'atténuateur (120).

22. Télémètre selon l'une des revendications 13 à 21, caractérisé par le fait qu'il comprend:

— des moyens (114) pour générer sur la base de m échantillons de bruit $X_i$ un signal représentatif de la valeur efficace $N_A$ du bruit ambiant tel que:

$$(16)\quad N_A^2 = \frac{1}{m} \sum_{i=1}^{m} X_i^2 ,$$

— des moyens (109) aptes à générer un signal représentatif de la variance de la phase estimée sur la base de la relation:

$$(30)\quad V(\widehat{\varphi}_E) = \frac{k_2\, N_A^2}{t_m\, Z_n} = \frac{k_2\, N_A^2}{t_m \sum_{i=1}^{n} Y_{i\Delta\nu_2}^2}$$

dans laquelle:

. $k_2$ est une constante,

. $Y_{i\Delta\nu 2}$ représente les échantillons du signal de réception bruité, et

. $t_m$ représente le temps de prélèvement de ceux-ci,

— et des moyens aptes à visualiser une information dérivée de la variance de la phase estimée $V(\widehat{\varphi_E})$.

23. Télémètre selon l'une des revendications 20 ou 22, caractérisé par le fait qu'il comprend en outre:

— des moyens (111) aptes à générer un signal représentatif d'une évaluation de l'écart type de la distance $\sigma_D$ proportionnel à la racine carrée de l'estimation de la variance de phase $\widehat{V(\varphi_E)}$ ou $V(\widehat{\varphi_E})$ et

— des moyens aptes à visualiser l'écart type de la distance $\sigma_D$.

24. Télémètre selon l'une des revendications 13 à 23, caractérisé par le fait qu'il comprend en outre des moyens (118) aptes à commander la croissance par incrément du gain M du récepteur jusqu'à ce que l'une des trois conditions suivantes soit satisfaite:

1) la polarisation du récepteur (7) est optimisée (219)

2) le gain M a atteint sa valeur maximale admise (224)

3) la moyenne du signal $\mu_s$ a atteint une valeur optimum correspondant à la limite supérieure de signal admise sans distortion h diminuée de $k_4$ fois l'écart type $\sigma_s$, $k_4$ étant compris entre 1 et 2 (225).

25. Télémètre selon la revendication 24, caractérisé par le fait que le récepteur est une photodiode à avalanche et la condition 1) est obtenue lorsque le bruit ambiant $N_A$ est environ le double du bruit $N_O$ des amplificateurs.

26. Télémètre selon la revendication 23, caractérisé par le fait qu'il comprend des moyens aptes à comparer (213) l'écart type estimé sur la distance $\sigma_{1D}$ avec une valeur prédéterminée $(\sigma_D)_M$ maximale pour commander le réglage du gain M lorsque l'écarte type estimé $\sigma_{1D}$ est supérieur à la valeur maximale $(\sigma_D)_M$.

27. Télémètre selon l'une des revendications 13 à 26, caractérisé par le fait qu'il comprend des moyens aptes à comparer l'écart type $\sigma_D$ avec une valeur prédéterminée maximale $(\sigma_D)_M$ pour commander l'accumulation des échantillons et affiner la mesure tant que l'écart type est supérieur à ladite valeur prédéterminée.

28. Télémètre selon l'une des revendications 13 à 27, caractérisé par le fait qu'il comprend des moyens de comparaison (103, 105) sensibles au signal de réception et adaptés pour n'autoriser la mesure que lorsque le signal reçu est compris entre la limite supérieure h du signal admise sans distortion et un seuil inférieur b.

**Patentansprüche**

1. Verfahren zur Bestimmung der Entfernung zwischen zwei Punkten, mit den Arbeitsschritten: Aussenden einer von einem Oszillator (2) modulierten elektromagnetischen Strahlung von einem ersten Punkt aus in Richtung auf den zweiten Punkt; am ersten Punkt Erfassen mit einem Empfänger (7) der am zweiten Punkt reflektierten elektromagnetischen Strahlung; Vergleichen der Phase eines ersten Signals, das von dem sich aus der Erfassung der elektromagnetischen Strahlung ergebenden Empfangssignal abgeleitet ist, mit einem zweiten Signal, das von der Sendemodulation abgeleitet ist; Generieren von Phasenabtastwerten $\varphi_i$, die für den Phasenwinkel zwischen dem ersten und dem zweiten Signal repräsentativ sind; Generieren eines für den Wert der Entfernung repräsentativen Nutzsignals aus den Phasenabtastwerten; und Anzeigen der Entfernung; dadurch gekennzeichnet, daß es ferner folgende Arbeitsschritte umfaßt:

i) Generieren eines für den Wert der Momentanvarianz $V(\varphi_i)$ der Phasenabtastwerte $\varphi_i$ repräsentativen Signals,

ii) Generieren, als Schätzfunktion der Phase, eines Zwischensignals, das dem Mittelwert $\widehat{\varphi_E}$ von n Phasenabtastwerten $\varphi_i$ entspricht, welche mit ihrer Momentanvarianz gewichtet wurden,

iii) Generieren des für den Wert der Entfernung D repräsentativen Nutzsignals ausgehend von der Schätzfunktion der Phase $\widehat{\varphi_E}$, und

iv) Anzeigen dieses Wertes der Entfernung D.

2. Verfahren zur Bestimmung der Entfernung zwischen zwei Punkten nach Anspruch 1, dadurch gekennzeichnet, daß das Empfangssignal so demoduliert wird, daß die Variationsbreite der verzerrungsfreien zugelassenen Signalamplituden den Bereich der Verteilungsfunktion der Amplituden des Empfangssignals, das ist das 4- bis 6fache der Standardabweichung $\sigma_s$ des Signals, abdeckt.

3. Verfahren zur Bestimmung der Entfernung zwischen zwei Punkten nach Anspruch 1 oder 2, dadurch gekennzeichnet, daß das Empfangssignal mit einem äquivalenten Durchlaßbereich $\Delta\nu_2$ gefiltert wird, der größer ist als die Breite $\Delta F$ des Turbulenzspektrums.

4. Verfahren zur Bestimmung der Entfernung zwischen zwei Punkten nach einem der Ansprüche 1 bis 3, dadurch gekennzeichnet, daß bei der Ausführung des vorgenannten Arbeitschrittes (ii) als für die Momentanvarianz der Phasenabtastwerte $V(\varphi_i)$ repräsentativer Wert ein Signal berücksichtigt wird, das dem Kehrwert des Quadrats vom Wert $Y_i$ des verrauschten Empfangssignals bei Betrachtung auf einem Durchlaßbereich, der etwas größer oder gleich der Breite des Turbulenzspektrums ist, proportional ist.

5. Verfahren zur Bestimmung der Entfernung zwischen zwei Punkten nach einem der Ansprüche 1 bis 3, dadurch gekennzeichnet, daß der vorgenannte Arbeitsschritt (i) mittels einer Erfassungskette durchgeführt wird, die eine Menge von $n_e$ Abtastwerten mit einer Frequenz, die $n_e$-mal größer ist als Abfragefrequenz für die n Phasenabtastwerte $\varphi_i$ ist, abfrägt.

6. Verfahren zur Bestimmung der Entfernung zwischen zwei Punkten nach einem der Ansprüche 1 bis 5, dadurch gekennzeichnet, daß es ferner den vorausgehenden Schritt (214) umfaßt, in dem ein in die Fortpflanzungsbahn der elektromagnetischen Strahlung eingeschaltetes optisches Dämpfungsglied (120) so gesteuert wird, daß der Mittelwert $\mu_s$ des Empfangssignals um das $k_4$-fache der Standardabweichung $\sigma_s$ kleiner ist als der verzerrungsfreie zugelassene obere Signalgrenzwert h, wobei $k_4$ zwischen 1 und 2 beträgt.

7. Verfahren zur Bestimmung der Entfernung zwischen zwei Punkten nach einem der Ansprüche 1 bis 6, dadurch gekennzeichnet, daß es folgende Arbeitsschritte umfaßt:

a) Messen des effektiven Rauschwertes $N_A$,

b) Generieren eines für den Mittelwert $\mu_s$ des Signals und für die Standardabweichung $\sigma_s$ repräsentativen Signals ausgehend von einer Summierung von Abtastwerten $y_i$ des Empfangssignals, einerseits, und vom Wert einer an der Strahlung vorgenommenen Dämpfung $A_j$, andererseits, und

c) Generieren eines für eine Schätzfunktion der Varianz der Phase $\widehat{V(\varphi_E)}$ repräsentativen Signals, wenn der effektive Rauschwert, der Mittelwert $\mu_s$ und die Standardabweichung $\sigma_s$ bekannt sind.

8. Verfahren zur Bestimmung der Entfernung zwischen zwei Punkten nach Anspruch 7, dadurch gekennzeichnet, daß es die Arbeitsschritte umfaßt: Generieren eines für eine Schätzung der Standardabweichung der Entfernung $\widehat{\sigma_{1D}}$, die der Quadratwurzel der Schätzfunktion der Phasenvarianz $\widehat{V(\varphi_E)}$ proportional ist, repräsentativen Signals und Anzeigen dieser Standardabweichung.

9. Verfahren zur Bestimmung der Entfernung zwischen zwei Punkten nach einem der Ansprüche 1 bis 8, dadurch gekennzeichnet, daß es ausserdem den Arbeitsschritt umfaßt, in dem die Verstärkung M des Empfängers (7) inkremental vergrößert wird, bis eine der drei nachstehend angegebenen Bedingungen erfüllt ist:

1) die Polarisierung des Empfängers (7) ist optimiert,

2) die Verstärkung M hat den zugelassenen Maximalwert erreicht,

3) der Mittelwert $\mu_s$ des Empfangssignals hat einen optimalen Wert erreicht, der dem verzerrungsfreien zugelassenen oberen Signalgrenzwert h, gemindert um das $k_4$-fache der Standardabweichung $\sigma_s$ entspricht, wobei $k_4$ zwischen 1 und 2 beträgt.

10. Verfahren zur Bestimmung der Entfernung zwischen zwei Punkten nach Anspruch 9, dadurch gekennzeichnet, daß der Empfänger eine Lawinenfotodiode (7) ist, und daß die Bedingung (1) erfüllt ist, wenn das Umgebungsgeräusch $N_A$ etwa das Doppelte des Rauschens $N_O$ der im Empfänger angeordneten Verstärker beträgt.

11. Verfahren zur Bestimmung der Entfernung zwischen zwei Punkten nach einem der Ansprüche 7, 8 und 9 in Verbindung miteinander, dadurch gekennzeichnet, daß die Generierung der für die Schätzung der Phasenvarianz $\widehat{V(\varphi_E)}$ bzw. der Standardabweichung der Entfernung $\sigma_D$ repräsentativen Signale sowie die Anzeige dieses letztgenannten Wertes nach der Regelung der Verstärkung M des Empfängers wiederholt werden.

12. Verfahren zur Bestimmung der Entfernung zwischen zwei Punkten nach einem der Ansprüche 1 bis 11, dadurch gekennzeichnet, daß die Arbeitsschritte (i) bis (iii) fortgesetzt werden, bis die Standardabweichung $\sigma_{2D}$ auf die Entfernung kleiner ist als ein im voraus festgelegter Maximalwert $(\sigma_D)_M$, um so die Anzahl n der abgefragten Abtastwerte zu vergrößern und die Messung zu verfeinern.

13. Entfernungsmesser, insbesondere zur Durchführung des Verfahrens nach einem der Ansprüche 1 bis 12, mit

— einem Oszillator (2) zugeordneten Sendeeinrichtungen (1) zum Aussenden einer modulierten elektromagnetischen Strahlung in Richtung auf einen bestimmten Meßpunkt,

— Empfangseinrichtungen (7, 8, 9, 12) zum Erzeugen eines Empfangssignals bei jeder Erfassung der am genannten Meßpunkt reflektierten elektromagnetischen Strahlung,

— Vergleichseinrichtungen (16) zum Vergleichen der Phase eines vom Empfangssignal abgeleiteten ersten Signals mit einem von der Sendemodulation abgeleiteten zweiten Signal, um Phasenabtastwerte $\varphi_i$ zu generieren, die für den Phasenwinkel zwischen dem ersten und dem zweiten Signal repräsentativ sind,

— Einrichtungen (107, 108, 110, 111) zur Bestimmung der Entfernung zwischen den Sende- und dem Empfangseinrichtungen, ausgehend von den Phasenabtastwerten,

— Einrichtungen (111) zur Anzeige der bestimmten Entfernung, dadurch gekennzeichnet, daß er ferner umfaßt:

— Einrichtungen (107, 108) zum Generieren eines für den Wert der Momentanvarianz $V(\varphi_i)$ der Phasenabtastwerte $\varphi_i$ repräsentativen Signals,

— Verarbeitungseinrichtung (110) zum Erzeugen eines Zwischensignals, das dem Mittelwert $\widehat{\varphi_E}$ von n Phasenabtastwerten $\varphi_i$ entspricht, die mit dem genannten, für ihre Momentanvarianz repräsentativen Wert gewichtet wurden,

— in den Bestimmungseinrichtungen Einrichtungen (111) zum Generieren eines für die genannte Entfernung repräsentativen Nutzsignals ausgehend von dem dem gewichteten Mittelwert $\widehat{\varphi_E}$ entsprechenden Zwischensignal, wobei das Nutzsignal den Anzeigeeinrichtungen als Information zugesandt wird, die für den von der Strahlung zurückgelegten Weg repräsentativ ist.

14. Entfernungsmesser nach Anspruch 13, dadurch gekennzeichnet, daß die Empfangseinrichtungen eine Erfassungskette umfassen, deren Bauelemente so abgestimmt sind, daß die Variationsbreite der verzerrungsfreien zugelassenen Signalamplituden den Bereich der Verteilungsfunktion der Amplituden des Empfangssignals, das ist das 4- bis 6fache der Standardabweichung $\sigma_s$ des Signals, abdeckt.

15. Entfernungsmesser nach einem der Ansprüche 13 und 14, dadurch gekennzeichnet, daß der äquivalente Durchlaßbereich $\Delta v_2$ der in der Erfassungskette enthaltenen Filter größer als die Breite $\Delta F$ des Turbulenzspektrums ist.

16. Entfernungsmesser nach einem der Ansprüche 13 bis 15, dadurch gekennzeichnet, daß die Einrichtungen (107, 108) zum Generieren eines für den Wert der Momentanvarianz $V(\varphi_i)$ repräsentativen Signals Einrichtungen umfassen, die auf den Wert des verrauschten Empfangssignals $Y_i$, bei Betrachtung in einer Bandbreite, die etwas größer oder gleich der Breite des Turbulenzspektrums ist, ansprechen.

17. Entfernungsmesser nach einem der Ansprüche 13 bis 16, dadurch gekennzeichnet, daß die Verarbeitungseinrichtungen (110) so abgestimmt sind, daß sie ein für den geschätzten Mittelwert der Phase $\widehat{\varphi_E}$ repräsentatives Signal ausgehend von der Beziehung:

$$(5) \quad \widehat{\varphi}_E = \frac{\sum_{i=1}^{n} \varphi_i \, Y_{i\,\Delta\nu_2}^2}{\sum_{i=1}^{n} Y_{i\Delta\nu_2}^2}$$

generieren, worin $\varphi_i$ die Phasenabtastwerte und $Y_{i\Delta\nu_2}$ den Wert des aus einem Rekursivfilter mit der Bandbreite $\Delta\nu_2$ kommenden verrauschten Empfangssignals darstellt.

18. Entfernungsmesser nach einem der Ansprüche 13 bis 15, dadurch gekennzeichnet, daß er in der Erfassungskette eine erste Erfassungsschaltung zur Abfrage von Phasenabtastwerten $\varphi_i$ und eine zweite Erfassungsschaltung zum Abfragen einer Menge von $n_e$ Abtastwerten mit einer Frequenz, die $n_e$-mal höher ist als die Abfragefrequenz für die n Phasenabtastwerte $\varphi_i$, um ihre Momentanvarianz $V(\varphi_i)$ zu bestimmen.

19. Entfernungsmesser nach einem der Ansprüche 13 bis 18, dadurch gekennzeichnet, daß er ferner umfaßt:

— ein optisches Dämpfungsglied (120) mit einer Vielzahl von Filtern, das in die Fortpflanzungsbahn der elektromagnetischen Strahlung eingeschaltet ist, und

— Steuerungseinrichtungen (117), die auf den Mittelwert $\mu_s$ des empfangenen Empfangssignals, in dB, ansprechen und die Stellung des Dämpfungsgliedes in der Weise zu regeln vermögen, daß dieser Mittelwert um das $k_4$-fache der Standardabweichung $\sigma_s$ kleiner als der verzerrungsfreie zugelassene obere Signalgrenzwert h ist, wobei $k_4$ zwischen 1 und 2 beträgt.

20. Entfernungsmesser nach einem der Ansprüche 13 bis 19, dadurch gekennzeichnet, daß er umfaßt:

— Einrichtungen (114) zum Generieren eines für den Effektivwert des Umgebungsrauschens $N_A$ repräsentativen Signals,

— Einrichtungen (112, 113, 115) zum Generieren von für den Mittelwert $\mu_s$ des Signals repräsentativen Signalen,

— Einrichtungen (116) zum Generieren eines für die geschätzte Varianz der Phase repräsentativen Signals ausgehend von der Beziehung:

$$(6) \quad \widehat{V(\varphi_E)} = \frac{k_2 N_A^2}{t_m} \; \frac{e^{-2a\,(\mu_s + a\,\sigma_s^2)}}{F\left[\dfrac{h - \mu_s - 2a\,\sigma_s^2}{\sigma_s}\right]}$$

worin $k_2$ und a Konstanten sind und $t_m$ die Meßdauer, F [ ] die Verteilungsfunktion der Normalverteilung der reduzierten zentrierten Variablen und h die verzerrungsfreie zugelassenene Maximalamplitude darstellen,

— und Einrichtungen, die auf das genannte Signal ansprechen und eine von der geschätzten Varianz der Phase abgeleitete Information anzuzeigen vermögen.

21. Entfernungsmesser nach Anspruch 20 in Verbindung mit Anspruch 19, dadurch gekennzeichnet, daß die Einrichtungen (112, 113, 115) zum Generieren der für den Mittelwert $\mu_s$ des Signals und für die Standardabweichung $\sigma_s$ des Signals repräsentativen Signale ausgelegt sind zum Generieren von Signalen, die

$$(7) \quad \mu_s = \frac{1}{p} \sum_{i=1}^{p} (A_j + y_i)$$

bzw.

$$(8) \quad \sigma_s = \sqrt{\frac{1}{p} \sum_{i=1}^{p} (A_j + y_i)^2 - \mu_s^2}$$

entsprechen, wobei in diesen Beziehungen $y_i$ die Abtastwerte des verrauschten Empfangssignals, ausgedrückt in dB, und Aj die durch das Dämpfungsglied (120) vorgenommene Dämpfung des Signals darstellt.

22. Entfernungsmesser nach einem der Ansprüche 13 bis 21, dadurch gekennzeichnet, daß er umfaßt:

— Einrichtungen (114) zum Generieren, ausgehend von m Rauschabtastwerten $X_i$, eines für den Effektivwert $N_A$ des Umgebungsgeräuschs repräsentativen Signals, z.B.

(16) $$N_A^2 = \frac{1}{m} \sum_{i=1}^{m} X_i^2 ,$$

— Einrichtungen (109) zum Generieren eines für die geschätzte Varianz der Phase repräsentativen Signals ausgehend von der Beziehung:

(30) $$V(\widehat{\varphi_E}) = \frac{k_2 N_A^2}{t_m Z_n} = \frac{k_2 N_A^2}{t_m \sum_{i=1}^{n} Y_{i_{\Delta\nu_2}}^2}$$

worin

$k_2$ eine Kontante ist,

$Y_{i\Delta\nu_2}$ die Abtastwerte des verrauschten Empfangssignals darstellt, und

$t_m$ die Dauer der Abfrage derselben darstellt,

— und Einrichtungen zum Anzeigen einer von der geschätzten Varianz der Phase $V(\widehat{\varphi_E})$ abgeleiteten Information.

23. Entfernungsmesser nach einem der Ansprüche 20 und 22, dadurch gekennzeichnet, daß er ferner umfaßt:

— Einrichtungen (111) zum Generieren eines für eine Schätzung der Standardabweichung der Entfernung $\sigma_D$, die der Quadratwurzel der Schätzung der Phasenvarianz $\widehat{V(\varphi_E)}$ oder $V(\widehat{\varphi_E})$ proportional ist, repräsentativen Signals, und

— Einrichtungen zum Anzeigen der Standardabweichung der Entfernung $\sigma_D$.

24. Entfernungsmesser nach einem der Ansprüche 13 bis 23, dadurch gekennzeichnet, daß er ferner umfaßt: Einrichtungen (118) zum Steuern der inkrementalen Zunahme der Verstärkung M des Empfängers, bis eine der drei nachstehend angegebenen Bedingungen erfüllt ist:

1) die Polarisierung des Empfängers (7) ist optimiert (219),

2) die Verstärkung M hat ihren zugelassenen Maximalwert erreicht (224),

3) der Mittelwert des Signals $\mu_s$ hat einen optimalen Wert erreicht, der dem um das $k_4$-fache der Standardabweichung $\sigma_s$ geminderten verzerrungsfreien zugelassenen oberen Signalgrenzwert h entspricht, wobei $k_4$ zwischen 1 und 2 beträgt (225).

25. Entfernungsmesser nach Anspruch 24, dadurch gekennzeichnet, daß der Empfänger eine Lawinenfotodiode ist, und die Bedingung (1) erreicht ist, wenn das Umgebungsgeräusch $N_A$ etwa das Doppelte des Rauschens $N_O$ der Verstärker beträgt.

26. Entfernungsmesser nach Anspruch 23, dadurch gekennzeichnet, daß er Einrichtungen (213) umfaßt zum Vergleichen der geschätzten Standardabweichung der Entfernung $\sigma_{1D}$ mit einem maximalen vorbestimmten Wert $(\sigma_D)_M$ zum Steuern der Regelung der Verstärkung M, wenn die geschätzte Standardabweichung $\sigma_{1D}$ größer als der Maximalwert $(\sigma_D)_M$ ist.

27. Entfernungsmesser nach einem der Ansprüche 13 bis 26, dadurch gekennzeichnet, daß er Einrichtungen umfaßt zum Vergleichen der Standardabweichung $\sigma_D$ mit einem maximalen vorbestimmten Wert $(\sigma_D)_M$ zum Steuern der Summierung der Abtastwerte und Verfeinern der Messung, solange die Standardabweichung größer als der genannte vorbestimmte Wert ist.

28. Entfernungsmesser nach einem der Ansprüche 13 bis 27, dadurch gekennzeichnet, daß er Vergleichseinrichtungen (103, 105) umfaßt, die auf das Empfangssignal ansprechen und so ausgelegt sind, daß sie die Messung nur dann freigeben, wenn das empfangene Signal zwischen dem oberen Grenzwert h des verzerrungsfreien zugelassenen Signals und einem unteren Schwellenwert b liegt.

**Claims**

1. A method of determining the distance between two points comprising the steps consisting in emitting an electromagnetic radiation modulated by an oscillator (2) from a first point towards a second point, in detecting at the first point electromagnetic radiation reflected at the second point by means of a receiver (7), in comparing the phase of a first signal derived from the received signal resulting from the detection of the electromagnetic radiation and of a second signal derived from the emission modulation, in generating phase samples $\varphi_i$ reprentative of the phase difference between the first and second signals, in generating a useful signal representative of the value of the distance from the phase samples and in displaying the distance, characterized in that the method further includes the following steps:

i) in generating a signal representative of the instantaneous variance $V(\varphi_i)$ of the phase samples $\varphi_i$;

ii) in generating as an estimation of the phase an intermediate signal corresponding to the average $\widehat{\varphi_E}$ of n phase samples $\varphi_i$ weighted by their instantaneous variance;

iii) in generating the uesful signal representative of the value of the distance D on the basis of the phase estimation $\widehat{\varphi_E}$; and

iv) in displaying this distance value.

2. A method of determining the distance between two points according to claim 1, characterized by the step of operating a discrimination of the received signal in such a manner that the range of signal amplitude variation passed without distortion covers the width of the distribution function of the received signal amplitudes, i.e. a range of four to six times the standard deviation $\sigma_s$ of the signal.

3. A method of determining the distance between two points according to one of claims 1 or 2, characterized by the step of filtering the received signal with an equivalent passband $\Delta\nu_2$ which is greater than the turbulence spectrum width $\Delta F$.

4. A method of determining the distance between two points according to one of claims 1 to 3, wherein the above-mentioned step ii) is performed by taking as the value representative of the instantaneous variance of the phase samples $V(\varphi_i)$ a signal which is proportional to the inverse of the square of the

value $Y_i$ of the noisy received signal under consideration over a passband which is slightly larger than or equal to the turbulance spectrum width.

5. A method of determining the distance between two points according to one of claims 1 to 3, wherein the above-mentioned step i) is performed by means of a detection chain which takes a set of $\underline{n}_e$ samples at a rate $\underline{n}_e$ times greater than the rate at which the $\underline{n}$ phase samples $\varphi_i$ are taken.

6. A method of determining the distance between two points according to one of claims 1 to 5, further comprising a preliminary step (214) consisting in controlling an optical attenuator (120) inserted on the propagation path of the electromagnetic radiation in such a manner that the average $\mu_s$ of the received signal S is less than the upper limit of the signal which can be received without distortion (h) by a factor of $k_4$ times the standard deviation $\sigma_s$, where $k_4$ lies in the range 1 to 4.

7. A method of determining the distance between two points according to one of claims 1 to 6, including the steps of:

a) measuring the r.m.s. noise value $N_A$;

b) generating a signal representative of the average $\mu_s$ and the standard deviation $\sigma_s$ of the signal on the basis of a collection of samples $y_i$ of the received signal together with the value of the attenuation $A_j$ applied to the radiation, and

c) generating a signal representative of an estimate of the phase variance $\widehat{V(\varphi_E)}$ given the r.m.s. noise value, the average $\mu_s$ and the standard deviation $\sigma_s$.

8. A method of determining the distance between two points according to claim 7, wherein the method comprises the steps consisting in generating a signal representative of an evaluation of the standard deviation of the distance $\widehat{\sigma_{1D}}$ proportional to the square root of the phase veriance estimation $\widehat{V(\varphi_E)}$, and in displaying the standard deviation.

9. A method of determining the distance between two points according to one of claims 1 to 8, comprising a further step consisting in increasing the gain M of the receiver (7) in increments until one of the three following conditions is satisfied:

1) the bias of the receiver (7) is optimized,

2) the gain M has reached its maximum permitted value, and

3) the average $\mu_s$ of the received signal has reached an optimum value corresponding to the upper limit of the signal which can be admitted without distortion (h) as reduced by $k_4$ times the standard deviation $\sigma_s$, where $k_4$ lies in the range 1 to 2.

10. A method of determining the distance between two points according to claim 9, wherein the receiver is an avalanche photodiode (7) and the abovementioned condition 1) is obtained when the noise $N_A$ under ambient lighting is about twice the noise $N_O$ from the amplifiers provided in the receiver.

11. A method of determining the distance between two points according to claims 7, 8 and 9 taken in combination, wherein the generation of the signals representative respectively of the estimation of the phase variance $\widehat{V(\varphi_E)}$ and of the standard deviation of the distance $\sigma_D$ deduced therefrom, together with the display of the standard deviation of the distance is reiterated after adjusting the gain M of the receiver.

12. A method of determining the distance between two points according to one of claims 1 to 11, wherein steps i) to iii) are continued until the standard deviation $\sigma_D$ of the distance is less than a predetermined maximum value $(\sigma_D)M$ thus increasing the number $\underline{n}$ of samples taken and improving the accuracy of the measurement.

13. A telemeter, particularly for performing the method according to one of claims 1 to 12, wherein the telemeter comprises:

— transmitter means (1) associated with an oscillator (2) suitable for emitting modulated electromagnetic radiation towards an observed point;

— receiver means (7, 8, 9, 12) suitable for generating a received signal by detection of the electromagnetic radiation after reflection at the said observed point;

— comparator means (16) suitable for comparing the phase of a first signal derived from the received signal and of a second signal derived from the emitted modulation, in order to generate phase samples $\varphi_i$ representative of the phase difference between the first and second signals,

— means (107, 108, 110, 111) for determining the distance between the transmitter means and the receiver means from the phase samples,

— displaying means (111) for displaying the determined distance, characterized in that the telemeter further includes:

— means (107, 108) suitable for generating a signal representative of the value of the instantaneous variance $V(\varphi_i)$ of the phase samples $\varphi_i$;

— processor means (110) suitable for generating an intermediate signal corresponding to the average $\widehat{\varphi_E}$ of $\underline{n}$ phase samples $\varphi_i$ weighted by the said value representative of their instantaneous variance;

— in the determining means, means (111) suitable for generating a useful signal representative of the distance on the base of the said intermediate signal corresponding to the weighted average $\widehat{\varphi_E}$, the useful signal being provided to the display means (111) as information representative of the distance travelled by the radiation.

14. A telemeter according to claim 13, wherein the receiver means comprises a detection chain, the components of which are designed in such a manner that the range of signal amplitude variation passed without distortion covers the width of the distribution function of the received signal amplitudes, i.e. a range of four to six times the standard deviation $\sigma_s$ of the signal.

15. A telemeter according to one of claims 13 or 14, wherein the equivalent passband $\Delta\nu_2$ of the filters included in the detection chain is greater than the turbulance spectrum width $\Delta F$.

16. A telemeter according to one of claims 13 to 15, wherein the means (107, 108) suitable for generating a signal representative of the value of the instantaneous variance $V(\varphi_i)$ comprises means sensitive to the value of the noisy received signal under consideration in a passband which is slightly wider than or equal to the turbulance spectrum width.

17. A telemeter according to one of claims 13 to 16, wherein the processor means (110) are adapted to generate a signal representative of the estimated average of the phase $\hat{\varphi}_E$ on the basis of the equation:

$$(5)\quad \hat{\varphi}_E = \frac{\sum_{i=1}^{n} \varphi_i\, Y_{i\,\Delta\nu_2}^2}{\sum_{i=1}^{n} Y_{i\Delta\nu_2}^2}$$

where $\varphi_i$ represents phase samples and $y_{i\Delta\nu_2}$ represents the value of the noisy received signal from a recursive filter having bandwidth $\Delta\nu_2$.

18. A telemeter according to one of claims 13 to 15, comprising in the detection chain a first detection circuit for taking the phase samples $\varphi_i$ and a seccond detection circuit suitable for taking a set of ne samples at a sampling rate which is ne times greater than the rate at which the n phase samples $\varphi_i$ are taken, for the purpose of determining their instantaneous variance $V(\varphi_i)$.

19. A telemeter according to one of claims 13 to 18, further comprising:

— an optical attenuator (120) comprising a plurality of filters inserted on the propagation path of the electromagnetic radiation, and

— control means (117) responsive to the average $\mu_s$ of the received signal S and suitable for controlling the positioning of the attenuator in such a manner that the said average is kept below the upper limit of the signal h which can be admitted without distortion by a factor of $k_4$ times the standard deviation $\sigma_s$, where $k_4$ lies in the range 1 to 2.

20. A telemeter according to one of claims 13 to 19, comprising:

— means (114) for generating a signal representative of the r.m.s. value of the ambient noise $N_A$,

— means (112, 113, 115) for generating signals representative of the average $\mu_s$ and of the standard deviation $\sigma_s$ of the signal,

— means (116) suitable for generating a signal representative of the estimated variance of the phase on the basis of the equation:

$$(6)\quad \widehat{V(\varphi_E)} = \frac{k_2 N_A^2}{t_m}\; \frac{e^{-2a\,(\mu_s + a\,\sigma_s^2)}}{F\left[\dfrac{h - \mu_s - 2a\,\sigma_s^2}{\sigma_s}\right]}$$

in which $k_2$ and a are constants, $t_m$ represents the measurement time, the notation F[ ] represents the normal law distribution function of the centered and reduced variable, and h designates the upper limit of the signal which can be admitted without distortion, and

— means sensitive to the said signal and suitable for displaying the estimated phase variance.

21. A telemeter according to claim 20 taken into combination with claim 19, characterized in that the means (112, 113, 115) suitable for generating signals representative of the average $\mu_s$ and the standard deviation $\sigma_s$ of the signal are adapted to generate signals which correspond respectively to:

$$(7)\quad \mu_s = \frac{1}{p} \sum_{i=1}^{p} (A_j + y_i)$$

and

$$(8)\quad \sigma_s = \sqrt{\frac{1}{p} \sum_{i=1}^{p} (A_j + y_i)^2 - \mu_s^2}$$

in which equation $y_i$ represents the noisy received signal samples expressed in dB and Aj represents the attenuation of the signal due to the attenuator (120).

22. A telemeter according to one of claims 13 to 21, including:

— means (114) for generating on the bases m noise samples $X_i$ a signal representative of the r.m.s. value of the ambient noise $N_A$ such that

$$(16)\quad N_A^2 = \frac{1}{m} \sum_{i=1}^{m} X_i^2 ,$$

— means (109) suitable for generating a signal representative of the variance in the estimated phase on the basis of the equation:

$$(30)\quad V(\hat{\varphi}_E) = \frac{k_2\, N_A^2}{t_m\, Z_n} = \frac{k_2\, N_A^2}{t_m \sum_{i=1}^{n} Y_{i\,\Delta\nu_2}^2}$$

where

$k_2$ is a constant

$y_{i\Delta v2}$ represents the samples of the noisy received signal and $t_m$ represents the sampling time thereof, and

— means suitable for displaying information derived from the variance of the estimated phase $V(\widehat{\varphi_E})$.

23. A telemeter according to one of claims 20 or 22, further comprising:

— means (111) suitable for generating a signal representative of an evaluation of the standard deviation of the distance $\sigma_D$ proportional to the square root of the estimation of the phase variance $\widehat{V(\varphi_E)}$, or $V(\widehat{\varphi_E})$, and

— means suitable for displaying the standard deviation of the distance $\sigma_D$.

24. A telemeter according to one of claims 13 to 23, further including:

— means (118) suitable for controlling incremental increases in the gain M of the receiver until one of the three following conditions is satisfied:

1) the bias of the receiver (7) is optimized (219);

2) the gain M has reached its maximum permitted value (224); and

3) the average of the signal $\mu_s$ has reached an optimum value corresponding to the upper limit of the signal admitted without distortion h as reduced by a factor of $k_4$ times the standard deviation $\sigma_s$, where $k_4$ lies in the range 1 to 2 (225).

25. A telemeter according to claim 24, wherein the receiver is an avalanche photodiode and the abovementioned condition 1) is obtained when the ambient noise $N_A$ is about twice the amplifier noise $N_O$.

26. A telemeter according to claim 23, comprising means suitable for comparing (213) the estimated standard deviation on the distance $\sigma_{1D}$ with a predetermined maximum value $(\sigma_D)_M$ to control an adjustment of the gain M when the estimated standard deviation $\sigma_{1D}$ is greater than the maximum value $(\sigma_D)_M$.

27. A telemeter according to one of claims 13 to 26, including means suitable for comparing the standard deviation $\sigma_D$ with a predetermined maximum value $(\sigma_D)_M$ to control the accumulation of samples and to improve the accuracy of the measurement for as long as the standard deviation is greater than the said predetermined value.

28. A telemeter according to one of claims 13 to 27, characterized in that it comprises comparator mans (103, 105) sensitive to the received signal and adapted to authorize measurement only when the received signal lies between an upper limit h of admissible signal level without distortion and a lower threshold b.

ETAT DE LA TECHNIQUE

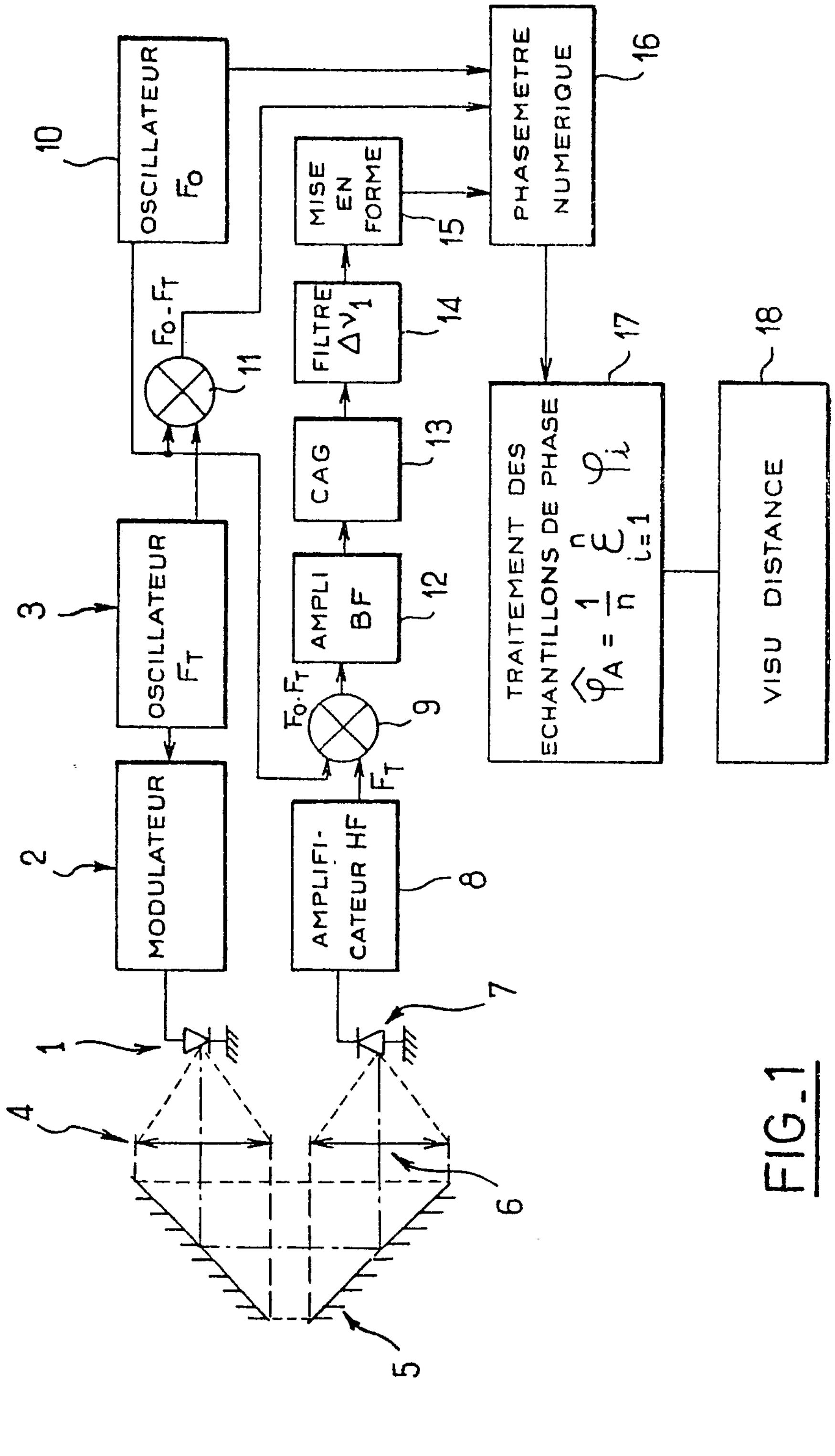


FIG_1

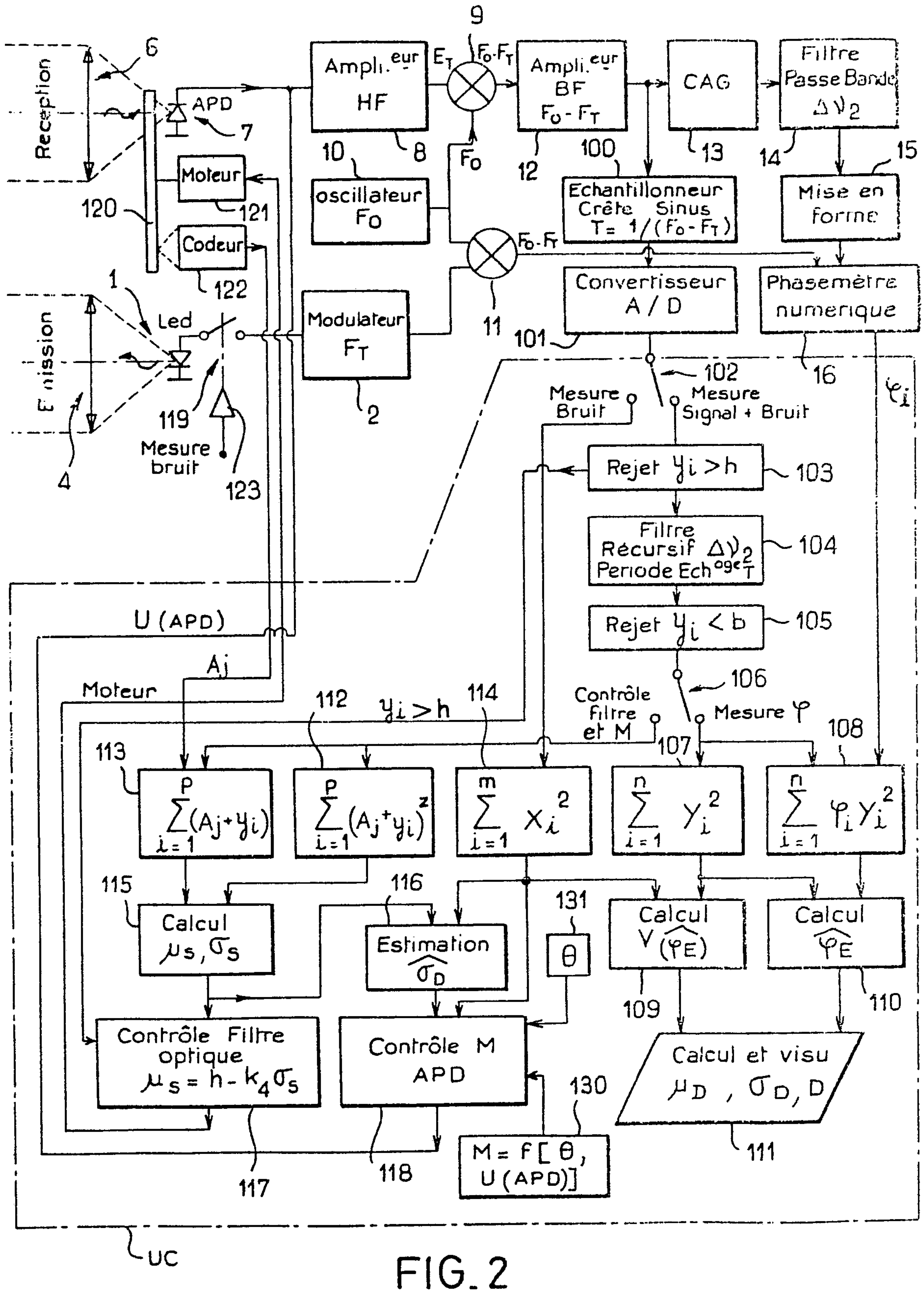

Réception
Emission
6
APD
7
1
Led
119
Mesure bruit
123
4
120
Moteur
121
Codeur
122
Ampli.eur HF
8
10
oscillateur $F_0$
Modulateur $F_T$
2
$E_T$
9
$F_0 - F_T$
$F_0$
11
Ampli.eur BF $F_0 - F_T$
12
100
CAG
13
Filtre Passe Bande $\Delta\nu_2$
14
15
Echantillonneur Crête Sinus $T = 1/(F_0 - F_T)$
Mise en forme
Convertisseur A / D
101
Phasemètre numerique
16
102
Mesure Bruit
Mesure Signal + Bruit
Rejet $y_i > h$
103
Filtre Récursif $\Delta\nu_2$ Periode Ech$^{age}$ T
104
Rejet $y_i < b$
105
106
Contrôle filtre et M
Mesure $\varphi$
107
108
$\varphi_i$
U (APD)
Aj
Moteur
112
$y_i > h$
114
113
$\sum_{i=1}^{p}(A_j + y_i)$
$\sum_{i=1}^{p}(A_j + y_i)^2$
$\sum_{i=1}^{m} x_i^2$
$\sum_{i=1}^{n} y_i^2$
$\sum_{i=1}^{n} \varphi_i y_i^2$
115
Calcul $\mu_s, \sigma_s$
116
Estimation $\widehat{\sigma_D}$
131
$\theta$
Calcul $V(\widehat{\varphi_E})$
Calcul $\widehat{\varphi_E}$
109
110
Contrôle Filtre optique $\mu_s = h - k_4\sigma_s$
Contrôle M APD
Calcul et visu $\mu_D$ , $\sigma_D$, D
130
$M = f[\theta, U(APD)]$
111
117
118
UC


FIG. 2

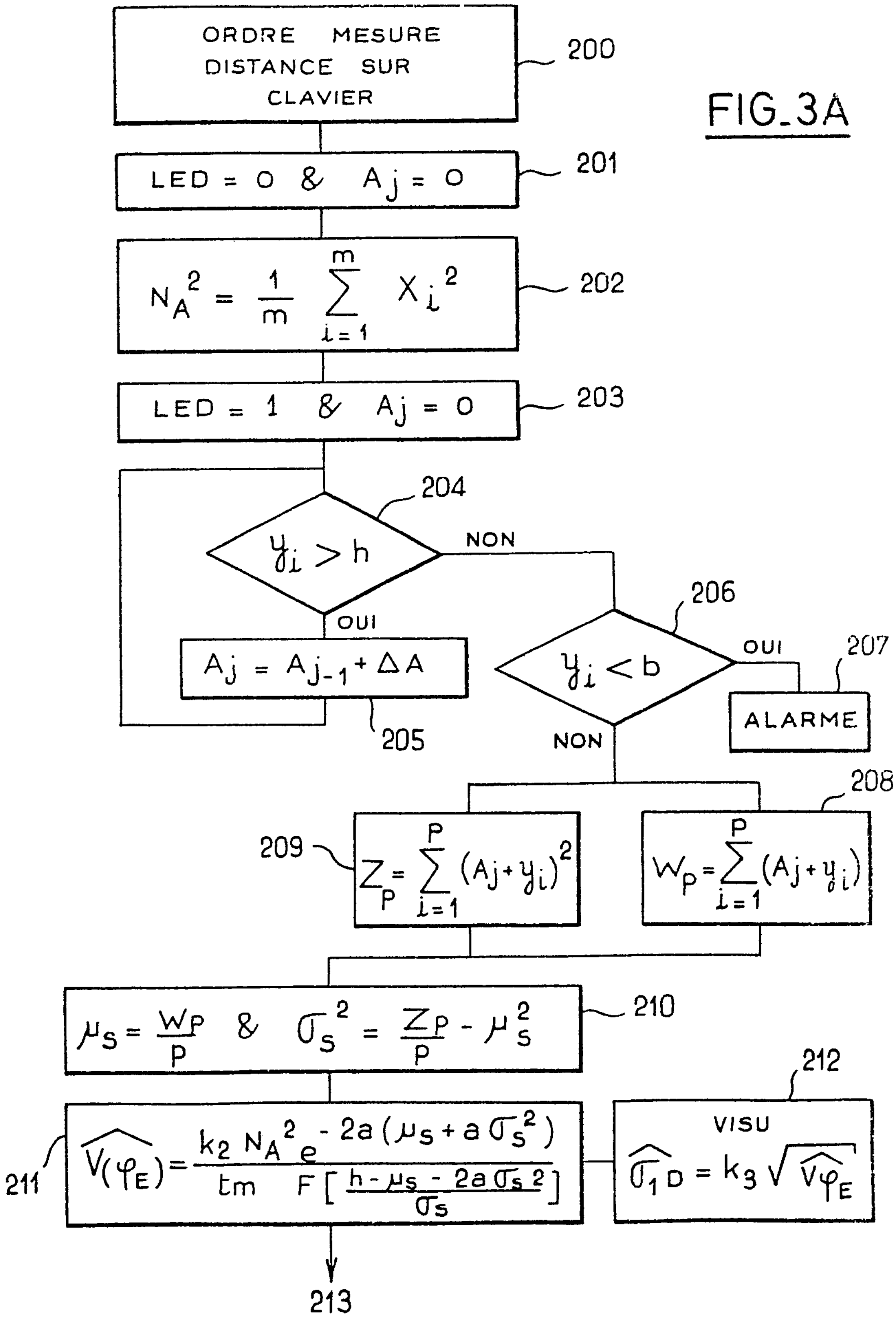
ORDRE MESURE DISTANCE SUR CLAVIER
200
LED = 0 & Aj = 0
201
$N_A^2 = \frac{1}{m} \sum_{i=1}^{m} X_i^2$
202
LED = 1 & Aj = 0
203
$y_i > h$
204
NON
OUI
$A_j = A_{j-1} + \Delta A$
205
$y_i < b$
206
OUI
NON
ALARME
207
$W_P = \sum_{i=1}^{P} (A_j + y_i)$
208
$Z_P = \sum_{i=1}^{P} (A_j + y_i)^2$
209
$\mu_S = \frac{W_P}{P}$ & $\sigma_S^2 = \frac{Z_P}{P} - \mu_S^2$
210
$\widehat{V(\varphi_E)} = \frac{k_2 N_A^2 e^{-2a(\mu_S + a\sigma_S^2)}}{t_m \quad F\left[\frac{h - \mu_S - 2a\sigma_S^2}{\sigma_S}\right]}$
211
VISU
$\widehat{\sigma_1} D = k_3 \sqrt{\widehat{V\varphi_E}}$
212
213

FIG_3A

FIG_3B

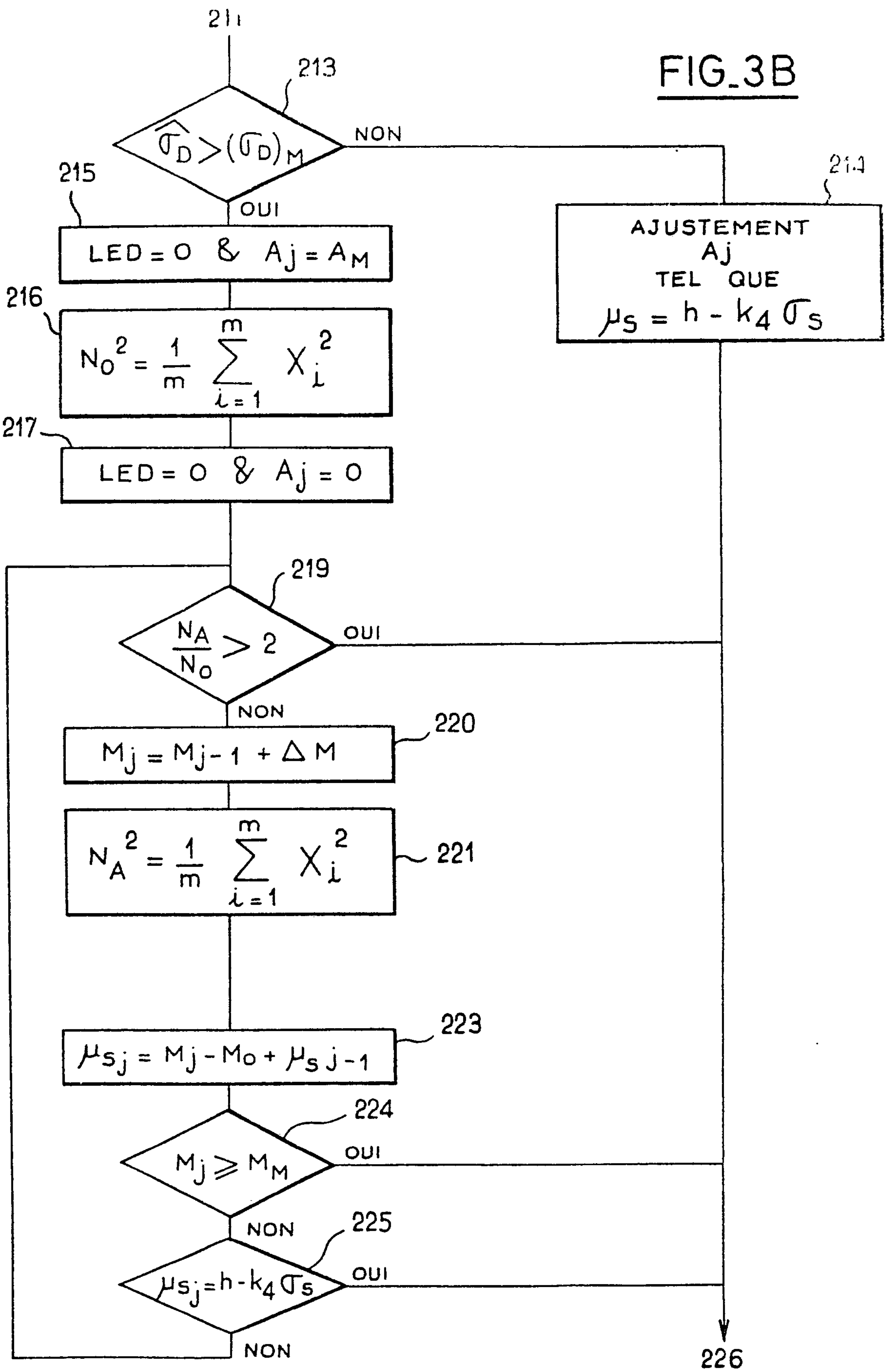
211
213
NON
OUI
214
AJUSTEMENT
Aj
TEL QUE
$\mu_S = h - k_4 \sigma_S$
215
LED = 0 & Aj = $A_M$
216
$N_0^2 = \frac{1}{m} \sum_{i=1}^{m} X_i^2$
217
LED = 0 & Aj = 0
219
$\frac{N_A}{N_0} > 2$
OUI
NON
220
$M_j = M_{j-1} + \Delta M$
221
$N_A^2 = \frac{1}{m} \sum_{i=1}^{m} X_i^2$
223
$\mu_{S_j} = M_j - M_0 + \mu_{S\,j-1}$
224
$M_j \geq M_M$
OUI
NON
225
$\mu_{S_j} = h - k_4 \sigma_S$
OUI
NON
226

FIG.3C

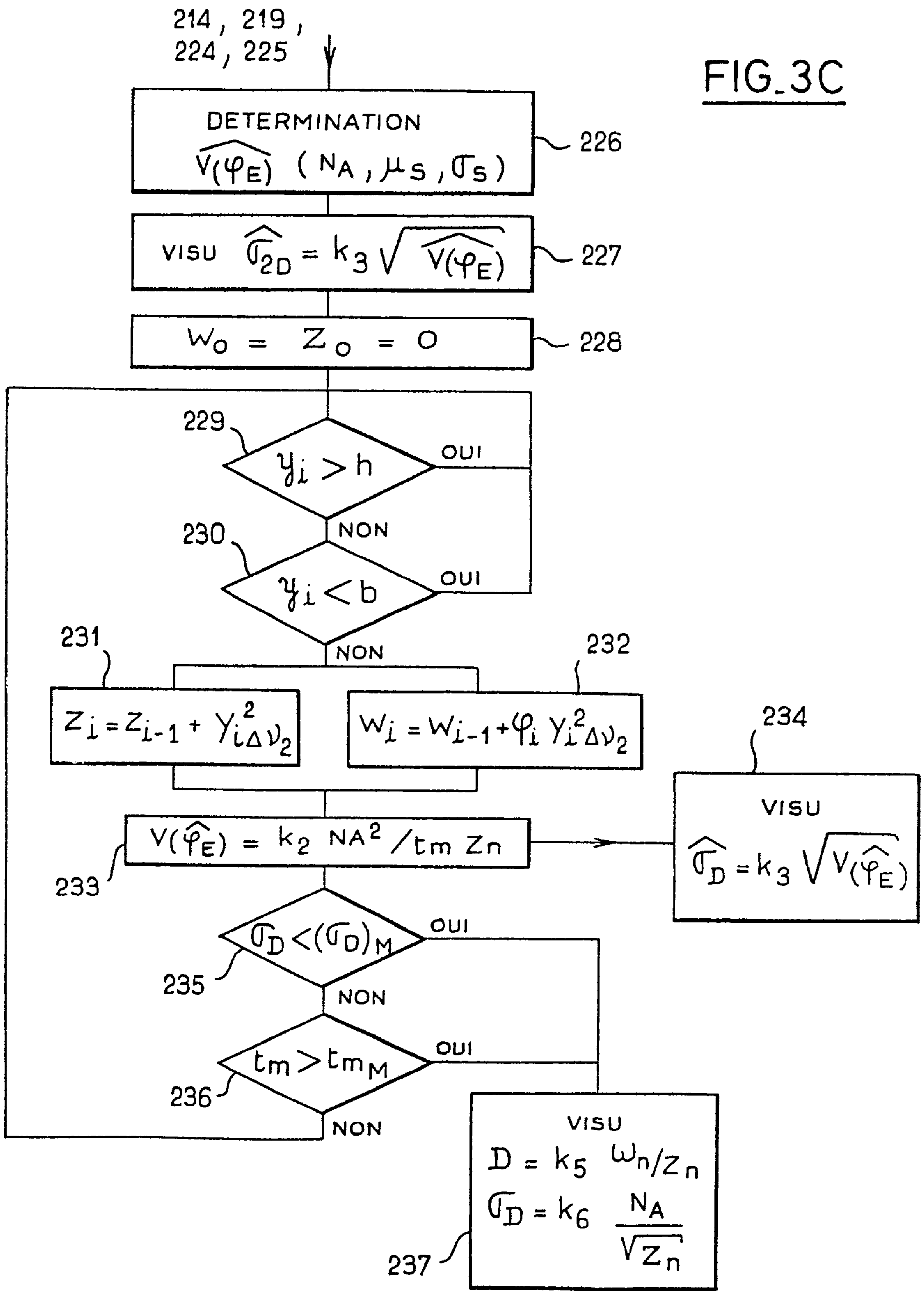

214, 219, 224, 225
DETERMINATION $\widehat{V(\varphi_E)}$ ($N_A$, $\mu_S$, $\sigma_S$)
226
VISU $\widehat{\sigma_{2D}} = k_3 \sqrt{\widehat{V(\varphi_E)}}$
227
$W_0 = Z_0 = 0$
228
229
$y_i > h$
OUI
NON
230
$y_i < b$
OUI
NON
231
$Z_i = Z_{i-1} + Y_{i\Delta\nu_2}^2$
232
$W_i = W_{i-1} + \varphi_i Y_{i\Delta\nu_2}^2$
233
$V(\widehat{\varphi_E}) = k_2 \; NA^2/tm \; Zn$
234
VISU
$\widehat{\sigma_D} = k_3 \sqrt{V(\widehat{\varphi_E})}$
235
$\sigma_D < (\sigma_D)_M$
OUI
NON
236
$tm > tm_M$
OUI
NON
VISU
$D = k_5 \; \omega_n/Z_n$
$\sigma_D = k_6 \dfrac{N_A}{\sqrt{Z_n}}$
237